(19) Europäisches Patentamt
European Patent Office
Office européen des brevets

(11) **EP 0 387 088 B1**

(12) **EUROPEAN PATENT SPECIFICATION**

(45) Date of publication and mention
of the grant of the patent:
**28.08.1996 Bulletin 1996/35**

(51) Int Cl.⁶: **G02B 7/34**

(21) Application number: **90302541.9**

(22) Date of filing: **09.03.1990**

(54) **Focus detection apparatus**

Gerät zur Fokussierungsbestimmung

Dispositif de détection de mise au point

(84) Designated Contracting States:
**DE FR GB**

(30) Priority: **10.03.1989 JP 59455/89**

(43) Date of publication of application:
**12.09.1990 Bulletin 1990/37**

(73) Proprietor: **NIKON CORPORATION**
**Tokyo (JP)**

(72) Inventor: **Uchiyama, Shigeyuki**
**Tokyo (JP)**

(74) Representative: **Burke, Steven David et al**
**R.G.C. Jenkins & Co.**
**26 Caxton Street**
**London SW1H 0RJ (GB)**

(56) References cited:
**US-A- 4 561 749          US-A- 4 851 657**

- **PATENT ABSTRACTS OF JAPAN vol. 13, no. 382 (P-923)(3730) August 24, 1989 & JP-A-1 134 317**
- **PATENT ABSTRACTS OF JAPAN vol. 10, no. 143 (P-459)(2200) May 27, 1986 & JP-A-60 262 004**
- **PATENT ABSTRACTS OF JAPAN vol. 10, no. 220 (P-482)(2276) July 31, 1986 & JP-A-61 55 618**

**Description**

BACKGROUND OF THE INVENTION:

Field of the Invention

The present invention relates to a focus detection apparatus used in, e.g., a single-lens reflex camera.

Related Background Art

As a conventional focus detection system, a phase difference detection system is known.

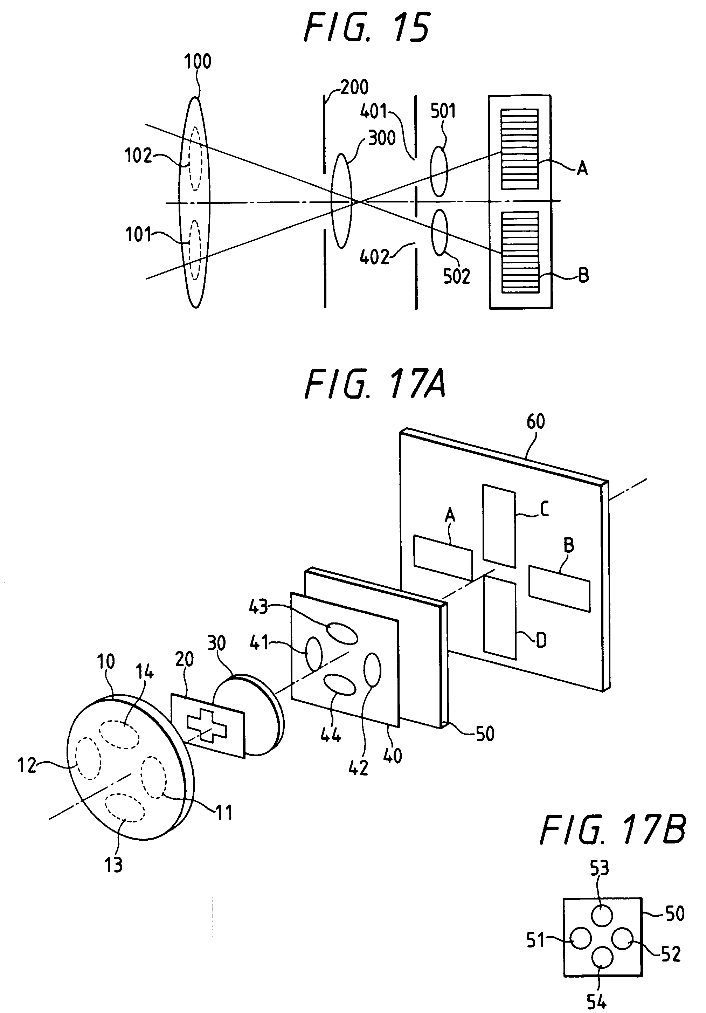

The phase difference detection system will be described below with reference to Fig. 15. Light incident through a region 101 of an object-lens 100 is focused on an image sensor array A through a field mask 200, a field lens 300, an aperture opening 401, and a refocusing lens 501.

Similarly, light incident through a region 102 of the object-lens 100 is focused on an image sensor array B through the field mask 200, the field lens 300, an aperture opening 402, and a refocusing lens 502.

In a so-called near-focus state wherein the object-lens 100 forms a sharp image of an object in front of a predicted focal plane, a pair of object images focused on the image sensor arrays A and B are separated away from each other. Contrary to this, in a so-called far-focus state wherein a sharp image of the object is formed behind the predicted focal plane, the two object images approach each other. In a so called in-focus state wherein a sharp image of the object is formed on the predicted focal plane, the object images on the image sensor arrays A and B relatively coincide with each other.

Therefore, the pair of object images are photoelectrically converted into electrical signals by the image sensor arrays. These signals are subjected to arithmetic processing to obtain relative positions of the pair of object images, thus calculating a focusing state of the object-lens 100, more particularly, a defocus amount representing a separation amount from the in-focus state and its direction.

An arithmetic processing method of calculating the defocus amount will be described below.

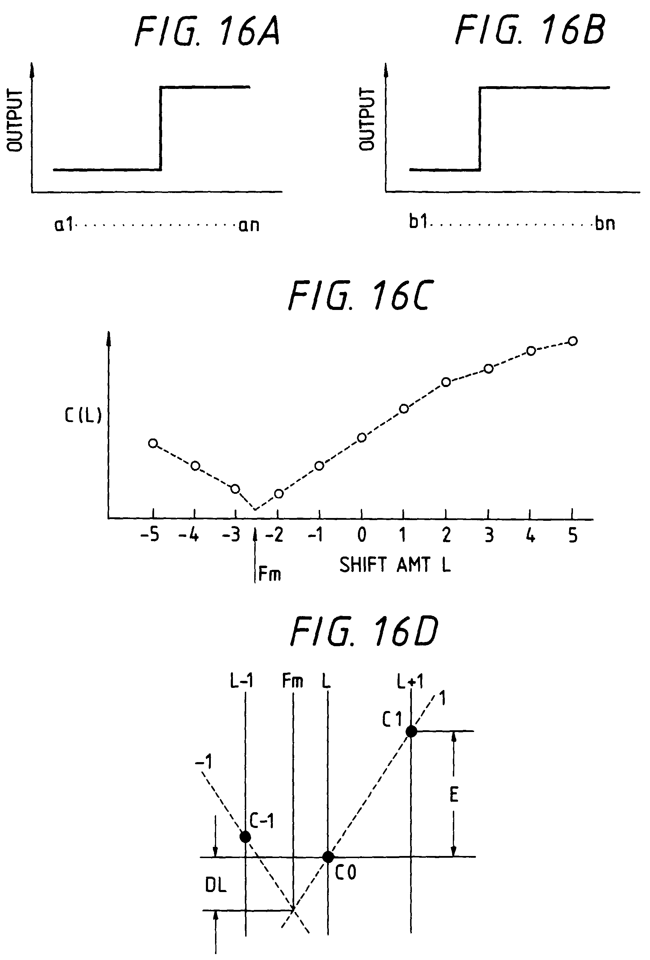

The image sensor arrays A and B shown in Fig. 15 respectively comprise pluralities of photoelectric transducers. As shown in Figs. 16A and 16B, the arrays A and B output pluralities of photoelectric conversion outputs $a1,..., an$, $b1,..., bn$, and perform correlative calculations while relatively shifting the data strings by the predetermined number L of data. More specifically, each array calculates a correlation amount $C(L)$ by the following equation:

$$C(L) = \sum_{i=k}^{r} |ai - bj|$$

$$j - i = L$$

$$L = -1max,..., -2, -1, 0, 1, 2,..., 1max \tag{1}$$

where L is an integer corresponding to a shift amount of the data string, as described above, and the first term $\underline{k}$ and the final term $\underline{r}$ may be changed depending on the shift amount L.

Of the calculated correlation amounts $C(L)$, a shift amount which yields a local minimum correlation amount is multiplied with a constant determined by the optical system and a pitch of the photoelectric transducers of the image sensor arrays A and B shown in Fig. 15, thus obtaining a defocus amount.

However, the correlation amount $C(L)$ is a discrete value, as shown in Fig. 16C, and a minimum unit of a detectable defocus amount is restricted by the pitch of the photoelectric transducers of the image sensor arrays A and B. Thus, a method of calculating a new local minimum value $C_{ex}$ by performing interpolation calculations based on the discrete correlation amounts $C(L)$ to execute precise focus detection is disclosed in U.S. Pat. No. 4,561,749.

The interpolation calculations are made using a correlation amount $C_0$ as a local minimum value and correlation amounts $C_1$ and $C_{-1}$ separated by the same shift amount on two sides of the amount $C_0$. A shift amount Fm which yields the local minimum value $C_{ex}$ and a defocus amount DF are given by the following equations:

$$DF = Kf \times Fm$$

$$Fm = L + DL/E$$

$$DL = (C_{-1} - C_1)/2$$

$$C_{ex} = C_0 - |DL|$$

$$E = MAX\{C_1 - C_0, C_{-1} - C_0\} \tag{2}$$

where MAX $(C_a, C_b)$ means to select a larger one of $C_a$ and $C_b$, and Kf is the constant determined by the optical system and the pitch of the photoelectric transducers of the image sensor arrays A and B shown in Fig. 15.

It must be judged whether the defocus amount obtained in this manner indicates a true defocus amount or is caused by a variation in correlation amount due to noise components. When the following condition is satisfied, it can be judged that the defocus amount is reliable:

$$E > E1 \text{ and } C_{ex}/E < G1$$

(E1 and G1 are predetermined values)                    Condition (1)

where E is a value depending on the contrast of an object, and as the value E is larger, the contrast is higher, and reliability is also higher. $C_{ex}/E$ mainly depends on noise components, and as it is closer to 0, reliability becomes higher. When it is determined that the obtained defocus amount is reliable, the object-lens 100 is moved to an in-focus position based on the defocus amount DF.

In the focus detection system described above, reliable focus detection is disturbed unless object images formed on the image sensor arrays have a certain contrast or more. In general, objects to be photographed tend to have a higher horizontal contrast than a vertical contrast. Thus, the pair of image sensor arrays A and B are arranged on the photographing surface in a horizontal direction, so that focus detection is performed based on the horizontal contrast.

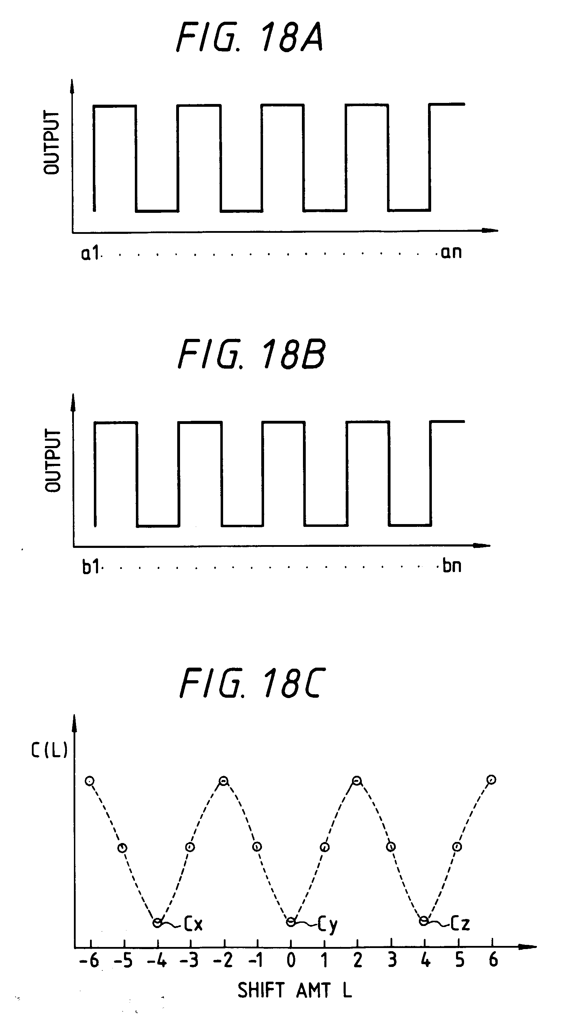

In another system, in consideration of a case wherein a horizontal contrast is low and a vertical contrast is high or a case wherein a camera is used in a vertical position, a pair of image sensor arrays A and B and a pair of image sensor arrays C and D are respectively arranged in both horizontal and vertical directions, as shown in Fig. 17A, so that focus detection can be performed based on both the horizontal and vertical contrasts.

In an optical system in this case, a field mask 20, a field lens 30, an aperture 40, a refocusing lens 50, and an image sensor chip 60 are arranged along the optical axis of an object-lens 10 in the order named. The field mask 20 has a cross-shaped opening, and is arranged near the predicted focal plane of the object-lens 10 so as to restrict an air image of an object focused by the object-lens 10. The aperture 40 has four openings 41, 42, 43, and 44, and these openings 41 to 44 are projected onto the object-lens 10 as opening images 11, 12, 13, and 14.

The refocusing lens 50 consists of four lenses 51, 52, 53, and 54 corresponding to the openings 41, 42, 43, and 44 of the aperture 40, respectively, as shown in Fig. 17B, and focuses an image of the field mask 20 on the image sensor chip 60.

Therefore, a light beam incident from the region 11 of the object-lens 10 is focused on the image sensor array A through the field mask 20, the field lens 30, the opening 41 of the aperture 40, and the lens 51 of the refocusing lens 50. Similarly, light beams incident from the regions 12, 13, and 14 of the object-lens 10 are respectively focused on the image sensor arrays B, C, and D.

Object images formed on the image sensor arrays A and B are separated from each other when the object-lens 10 is in a near-focus state. The images approach each other in a far-focus state. In an in-focus state, the images are aligned at a predetermined distance. Thus, the signals from the image sensor arrays A and B are subjected to arithmetic processing to detect a horizontal focusing state of the object-lens 10.

Similarly, object images formed on the image sensor arrays C and D are separated from each other when the object-lens 10 is in a near-focus state. The images approach each other in a far-focus state. In an in-focus state, the images are aligned at a predetermined distance. Thus, the signals from the image sensor arrays C and D are subjected to arithmetic processing to detect a vertical focusing state of the object-lens 10.

Whether the lens is driven based on a focusing state according to a horizontal or vertical contrast can be determined by, for example:

(1) a method of selecting a contrast having higher reliability (e.g., having the larger value E);
(2) a method of preferentially using one direction (e.g., horizontal direction) and performing focus detection using the other direction when no reliable result can be obtained or when no local minimum value $C_0$ is present and calculations are disabled; and
(3) a method of averaging calculation results in both the directions.

In the focus detection apparatus described above, when a plurality of object images having different distances are formed on the image sensor arrays, an in-focus state may be erroneously determined by a near-or far-focus distance of an object from an in-focus position, or focus detection may be disabled.

Thus, in still another method disclosed in, e.g., Japanese Patent Laid-Open Nos. 60-262004 and 61-55618, U.S. Patent No. 4,851,657, Japanese Patent Laid-Open No. 62-155608, and the like, each of a pair of image sensor arrays is divided into a plurality of blocks to segment an object, and focus detection calculations are performed in units of blocks. On the basis of a plurality of calculation results, a block in which the closest object is present or in which an object having the maximum contrast is present is selected. The calculation result of the selected block is determined as a focus detection state of an object-lens. In a camera, the object-lens is driven to an in-focus position based on the calculation result.

However, the conventional phase difference detection system is ineffective for an object having a periodic contrast. When an image of an object having a periodic contrast is formed on image sensor arrays and image sensor array outputs shown in Fig. 18A and 18B are obtained, correlation amounts C(L) have a plurality of local minimum values $C_x$, $C_y$, and $C_z$, as shown in Fig. 18C. As a result, a plurality of defocus amounts are calculated. In this case, a true defocus amount cannot be specified, and the object-lens may be driven based on a quite wrong defocus amount.

When each of a pair of image sensor arrays is divided into a plurality of blocks to segment an object, an object which does not have a periodic pattern before division may cause blocks to form periodic patterns after division.

According to the present invention, there is provided a focus detection apparatus comprising:

first photoelectric conversion means having a first light receiving region for outputting an electrical signal corresponding to a light intensity distribution on said first light receiving region;
second photoelectric conversion means having a second light receiving region for outputting an electrical signal corresponding to a light intensity distribution on said second light receiving region;
optical means for splitting a light beam from a focus detecting area of an object to be photographed into two light beams to direct one of the two light beams on said first photoelectric conversion means and the other of the two light beams on said second photoelectric conversion means;
focus information producing means for producing at least one focus datum with respect to a focus condition of a photographic lens and producing at least one reliability datum representing the reliability of said at least one focus datum on the basis of the electrical signal corresponding to at least one part of said first light receiving region and the electrical signal corresponding to at least one part of said second light receiving region;

characterised by
periodicity judging means for discriminating whether said at least one reliability datum satisfies a first reliability condition and/or a second reliability condition which is broader than said first condition, said periodicity judging means being arranged to judge whether the object image has a periodic contrast pattern by detecting whether at least two said focus data, for which the corresponding reliability data satisfy at least one of said first and said second conditions, are produced by said focus information producing means.

The present invention has been made in consideration of the conventional problems, and has an advantage which can eliminate a weak point of a conventional phase difference detection system against an object having a periodic contrast.

The present invention may be applied to a focus detection apparatus which employs a phase difference system wherein an object image in a focus detection range is divided into two images by a focus detecting optical system, the two images are projected onto a pair of photoelectric transducer arrays, a distance measurement range is set to be one block or is divided into a plurality of blocks, and focus detection data is calculated for each block on the basis of output signals from the photoelectric transducer arrays.

The focus detection apparatus comprises: periodic pattern detection means for determining that two or more focus detection data of an object image are obtained from one block, thereby detecting that a periodic pattern has a periodic contrast; and alarming means for generating a periodic pattern alarm based on the detection output of the periodic pattern detection means.

The periodic pattern detection means determines that an object image has a periodic contrast when two or more calculation results satisfying a predetermined first condition (the above-mentioned Condition (1)) are obtained in calculations of focus detection data.

According to another aspect of the periodic pattern detection means, the detection means may determine that an object has a periodic contrast when two or more calculation results which satisfy a second condition broader than the first condition are obtained.

According to still another aspect of the periodic pattern detection means, when there is no calculation result satisfying a third condition which is more strict than the first condition, the detection means determines that an object has a periodic contrast when two or more calculation results satisfying the second condition broader than the first condition are obtained. On the other hand, when a calculation result satisfying the third condition is present, the detection means determines that an object has a periodic pattern when two or more calculation results satisfying a fourth condition more strict than the second condition are obtained.

The present invention may also be applied to a focus detection apparatus in which each of object images in orthogonal focus detection ranges is divided into two images by a focus detecting optical system, the two images are projected onto a corresponding one of two pairs of photoelectric transducer arrays which are orthogonally arranged, and focus detection data are calculated from output signals from the two pairs of photoelectric transducer arrays in units of photoelectric transducer arrays.

When focus detection data are independently calculated in both the horizontal and vertical directions, the apparatus comprises: periodic pattern detection means for determining that two or more focus detection data of an object image are obtained from each photoelectric transducer array so as to detect a periodic pattern having a periodic contrast; and means for, when the periodic pattern detection means detects the periodic pattern from calculation results of one photoelectric transducer array, if there is one calculation result of the one pair of photoelectric transducer arrays in a predetermined range having a calculation result of the other pair of photoelectric transducer arrays as the center, outputting the one calculation result as a true calculation result.

In an embodiment of the present invention, the apparatus further comprises means for widening a range of a block from which a detection output of the periodic pattern detection means is obtained and recalculating focus detection data.

According to the above arrangement, since the periodic pattern detection means is arranged, it can be determined whether or not an object image has a periodic pattern. Thus, a periodic pattern alarm is generated to a photographer independently of a focus undetectable alarm caused by a low contrast, thus signalling to him or her that an error is caused by an object having a periodic contrast.

Therefore, the photographer can instantaneously know that focus detection is disabled since an object has no contrast or since an object has a periodic pattern, and can take an appropriate countermeasure.

When focus detecting element arrays are orthogonally arranged in the horizontal and vertical directions and when a periodic pattern is detected in, e.g., the horizontal direction, if there is one horizontal calculation result in a predetermined range having a vertical calculation result as the centre, the calculation result is efficiently utilized as horizontal focus detection data.

In particular, as most of objects forming a periodic pattern, objects (e.g., trees) which extend vertically are periodically aligned in the horizontal direction like a row of trees. Such objects tend not to simultaneously form periodic patterns in both the horizontal and vertical directions. Therefore, even when a horizontal periodic pattern is detected, a correct calculation result can be obtained in the vertical direction. Thus, proper focus detection data can be found out from the horizontal periodic pattern by utilizing the vertical calculation result.

Furthermore, when an image sensor array is divided into a plurality of blocks to perform focus detection and when a periodic pattern is detected from a specific block, the specific block is widened to recalculate data. Thus, this embodiment is effective when an object which does not form a periodic pattern in a wide range forms a periodic pattern after it is divided into blocks.

## BRIEF DESCRIPTION OF THE DRAWINGS:

Fig. 1 is a schematic block diagram of an embodiment of the present invention;
Fig. 2 is a flow chart showing a first method of detecting a periodic pattern in an embodiment of the present invention;
Fig. 3 is a flow chart showing a second method of detecting a periodic pattern in an embodiment of the present invention;
Fig. 4 is a flow chart showing a third method of detecting a periodic pattern in an embodiment of the present invention;
Figs. 5A and 5B are views for explaining image sensor arrays in an embodiment of the present invention;
Fig. 6 is a flow chart showing a first embodiment of the present invention;
Fig. 7 is a flow chart showing SUB ROUTINE 1 in Fig. 6;
Fig. 8 is a flow chart showing SUB ROUTINE 2 in Fig. 6;
Figs. 9A, 9B, and 9C are views for explaining objects forming a horizontal periodic pattern;
Fig. 10 is a flow chart showing a second embodiment of the present invention;
Fig. 11 is a flow chart showing a third embodiment of the present invention;
Fig. 12 is a flow chart showing a fourth embodiment of the present invention;
Fig. 13 is a flow chart showing a fifth embodiment of the present invention;
Fig. 14 is a view explaining a case wherein a block range of the image sensor array is widened in the embodiment shown in Fig. 13;
Fig. 15 is a view for explaining a conventional focus detecting optical system;
Figs. 16A, 16B, 16C and 16D are view for explaining conventional focus detection calculations;
Figs. 17A and 17B are views for explaining a conventional focus detecting optical system having horizontal and vertical focus detection ranges, and
Figs. 18A, 18B, and 18C are views for explaining a focus detection state when an object forms a periodic pattern.

DESCRIPTION OF THE PREFERRED EMBODIMENTS:

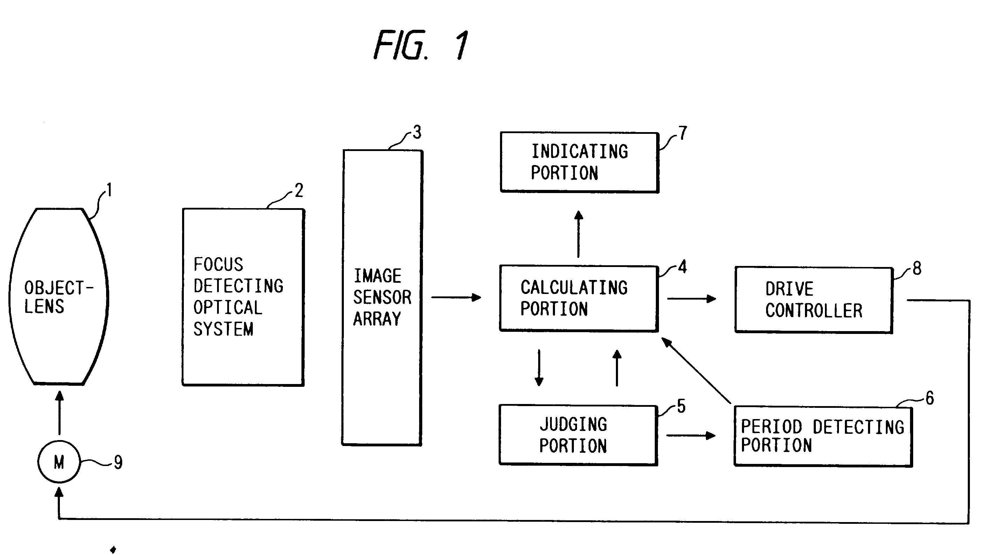

Fig. 1 is a schematic block diagram of an arrangement in an embodiment of the present invention.

A focus detection apparatus shown in Fig. 1 includes an object-lens 1, a focus detecting optical system 2 shown in Fig. 15 or 17A and 17B and a pair of image sensor arrays 3. The image sensor arrays are aligned in one direction, as shown in Fig. 15, or are aligned in two directions, i.e., the horizontal and vertical directions, as shown in Fig. 17A.

The apparatus also includes a calculating portion 4 which loads data from the image sensor arrays 3 and performs processing associated with defocus amount calculations such as correlation calculations, interpolation calculations, and the like. A judging portion 5 judges reliability of a defocus amount calculated by the calculating portion 4. A period (or periodic pattern) detecting portion 6 detects whether or not an object forms a periodic pattern. The apparatus also includes an indicating portion 7 for generating a focus undetectable alarm or a periodic pattern alarm, and a drive controller 8 for driving a motor 9 on the basis of the defocus amount calculated by the calculating portion 4.

A method of detecting whether or not an object forms a periodic pattern according to the present invention will be described below.

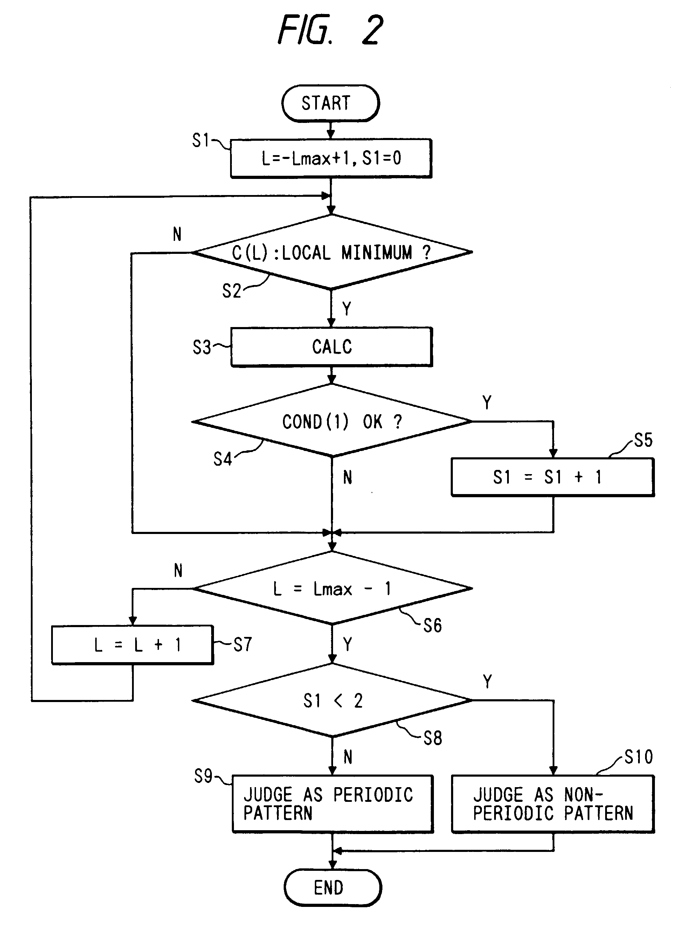

The first periodic pattern detection method is a method of determining that an object is a periodic pattern when there are defocus amounts satisfying Condition (1), i.e., a plurality of reliable defocus amounts. This method will be described below with reference to the flow chart of Fig. 2.

Assume that correlation amounts $C(L)$ have already been calculated by equations (1) described above within the range of shift amounts $L = -L_{max}$ to $L_{max}$ prior to the processing shown in Fig. 2.

In step 1, variables are initialized. More specifically, the shift amount $L$ is set to be $L = -L_{max+1}$, and a counter S1 for counting the number of defocus amounts satisfying Condition (1) is set to be S1 = 0.

It is checked in step 2 if the correlation amount $C(L)$ is a local minimum value, i.e., is smaller than correlation amounts $C(L-1)$ and $C(L+1)$ shifted from the amount $C(L)$ by the same shift amount. If it is determined in step 2 that the correlation amount $C(L)$ is a local minimum value, the flow advances to step 3, and interpolation calculations using equations (2) are made to calculate a defocus amount. It is then checked in step 4 if the defocus amount calculated in step 4 satisfies Condition (1). If YES (Y) in step 4, the content of the counter S1 is incremented by 1, and the flow advances to step 6. On the other hand, if NO (N) in step 4, the flow advances to step 6 without incrementing the content of the counter S1.

If it is determined in step 2 that the correlation amount $C(L)$ is not a local minimum value, the flow advances to step 6 without performing interpolation calculations. It is checked in step 6 if the shift amount $L$ is $L_{max-1}$. If NO in step 6, the shift amount $L$ is incremented by one in step 7, and the flow returns to step 2. Thus, the same operations are repeated.

If it is determined in step 6 that $L = L_{max-1}$, the flow advances to step 8 to check if the content of the counter S1 is smaller than 2. When the content of the counter S1 is equal to or larger than 2, since an object may be a periodic pattern, a periodic pattern is judged in step 9. If the content of the counter S1 is smaller than 2, a non-periodic pattern is judged in step 10.

In the first periodic pattern detection method described above, when there are a plurality of defocus amounts which satisfy Condition (1) and are determined to be reliable, it is judged that an object is a periodic pattern.

However, when an object-lens is far from an in-focus state, object images formed on image sensor arrays are blurred, resulting in a low contrast. In this case, the above-mentioned values E of the plurality of defocus amounts become small as compared to an in-focus state, and vary around E1 as the threshold value of Condition (1). As a result, if so, no periodic pattern may be detected.

Thus, in a second periodic pattern detection method, Condition (2) which is broader than Condition (1) is set, and when a plurality of defocus amounts satisfying Condition (2) are generated, a periodic pattern is detected.

Condition (2) is as follows:

$$E > E2 \text{ and } C_{ex}/E < G2$$

$$(E2 < E1, G2 \geq G1) \qquad \qquad \text{Condition (2)}$$

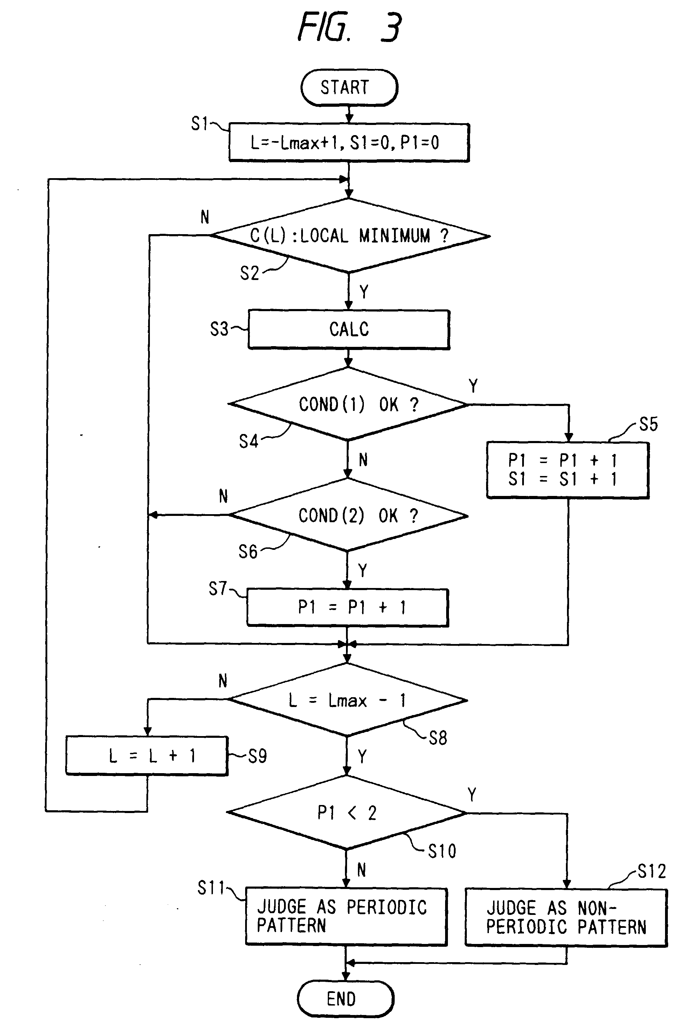

The second periodic pattern detection method will be described below with reference to the flow chart shown in Fig. 3. Assume that correlation amounts $C(L)$ have already been calculated by equations (1) within the range of the shift amounts $L = -L_{max}$ to $L_{max}$ prior to the processing shown in Fig. 3.

In step 1, variables are initialized. In this case, the shift amount $L$ is set to be $L = -L_{max+1}$, a counter S1 for counting the number of defocus amounts satisfying Condition (1) is set to be S1 = 0, and a counter P1 for counting the number of defocus amounts satisfying Condition (2) is set to be P1 = 0.

It is checked in step 2 if the correlation amount $C(L)$ is a local minimum value, i.e., is smaller than correlation amounts $C(L-1)$ and $C(L+1)$ shifted from the amount $C(L)$ by the same shift amount. If it is determined in step 2 that the correlation amount $C(L)$ is a local minimum value, the flow advances to step 3, and interpolation calculations using equations (2) are made to calculate a defocus amount. It is then checked in step 4 if the defocus amount calculated in step 4 satisfies Condition (1). If YES in step 4, the content of the counter S1 is incremented by 1, and the flow advances to step 5. In step 5, the contents of the counters S1 and P1 are incremented by one each, and the flow advances to step 8. On the other hand, if NO in step 4, the flow advances to step 6 without incrementing the contents of the counters S1 and P1.

It is checked in step 6 if the defocus amount satisfies Condition (2). If YES in step 6, the content of the counter P1 is incremented by one in step 7, and the flow advances to step 8. However, if NO in step 6, the flow advances to step 8 without incrementing the content of the counter P1.

If it is determined in step 2 that the correlation amount $C(L)$ is not a local minimum value, the flow advances to step 8 without performing interpolation calculations. It is checked in step 8 if the shift amount L is $L_{max-1}$. If NO in step 8, the shift amount L is incremented by one in step 9, and the flow returns to step 2. Thus, the same operations are repeated. If YES in step 8, the flow advances to step 10 to check if the content of the counter P1 is smaller than 2. When the content of the counter P1 is equal to or larger than 2, since an object may be a periodic pattern, a periodic pattern is judged in step 11. If the content of the counter P1 is smaller than 2, a non-periodic pattern is judged in step 12.

According to the second periodic pattern detection method described above, even when an object-lens is far from an in-focus state, a periodic pattern can be detected.

However, when an object is a periodic pattern, values F in the plurality of defocus amounts obtained by interpolation calculations have almost the same value, and hence, only one value cannot become larger than other values.

Therefore, when a defocus amount having a value E sufficiently larger than E1 is present, an object cannot always be judged as a periodic pattern although another defocus amount satisfying Condition (2) is detected.

Thus, in a third periodic pattern detection method, a periodic pattern is judged based on the number of defocus amounts satisfying Condition (2) like in the second periodic pattern detection method. When a defocus amount having a value E sufficiently larger than E1 is detected, a periodic pattern is detected based on the number of defocus amounts which satisfy a condition more strict than Condition (2).

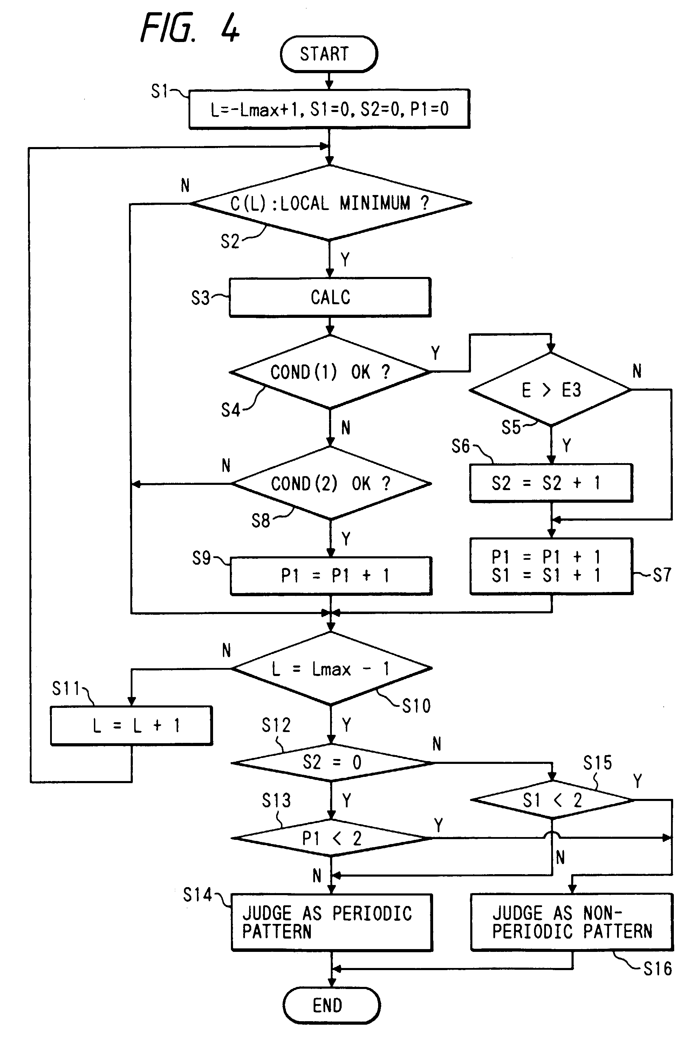

The third periodic pattern detection method will be described below with reference to the flow chart of Fig. 4. As the condition more strict than Condition (2), Condition (1) described above is used. Assume that correlation amounts $C(L)$ have already been calculated by equations (1) within the range of the shift amounts $L = -L_{max}$ to $L_{max}$ prior to the processing shown in Fig. 4.

In step 1, variables are initialized. In this case, the shift amount L is set to be $L = -L_{max+1}$, a counter S1 for counting the number of defocus amounts satisfying Condition (1) is set to be $S1 = 0$, a counter P1 for counting the number of defocus amounts satisfying Condition (2) is set to be $P1 = 0$, and a counter S2 for counting the number of defocus amounts satisfying a value E3 sufficiently larger than E1 is set to be $S2 = 0$.

It is checked in step 2 if the correlation amount $C(L)$ is a local minimum value, i.e., is smaller than correlation amounts $C(L-1)$ and $C(L+1)$ shifted from the amount $C(L)$ by the same shift amount. If it is determined in step 2 that the correlation amount $C(L)$ is a local minimum value, the flow advances to step 3, and interpolation calculations using equations (2) are made to calculate a defocus amount. It is then checked in step 4 if the defocus amount calculated in step 4 satisfies Condition (1). If YES in step 4, the content of the counter S1 is incremented by 1, and the flow advances to step 5; otherwise, the flow advances to step 8. It is checked in step 5 if the value E is larger than E3. If YES in step 5, the content of the counter S2 is incremented by one, and the flow advances to step 7. If NO in step 5, the flow advances to step 7 without incrementing the content of the counter S2. In step 7, the contents of the counters P1 and S1 are incremented by one each, and the flow advances to step 10.

If it is determined in step 4 that Condition (1) is not satisfied, it is checked in step 8 if the local minimum value $C_{ex}$ satisfies Condition (2). If YES in step 8, the flow advances to step 9. In step 9, the content of the counter P1 is incremented by one, and the flow advances to step 10. If NO in step 8, the flow advances to step 10 without incrementing the content of the counter P1.

If it is determined in step 2 that the correlation amount $C(L)$ is not a local minimum value, the flow advances to step 10 without performing interpolation calculations. It is checked in step 10 if the shift amount L is $L_{max-1}$. If NO in step 10, the shift amount L is incremented by one in step 11, and the flow returns to step 2. Thus, the same operations are repeated.

If YES in step 10, the flow advances to step 12 to check if the content of the counter S2 is 0. When the counter $S2 = 0$, this means that there is no defocus amount having the value E sufficiently larger than E1. In this case, a periodic pattern must be detected based on the number of defocus amounts satisfying Condition (2), i.e., the content of the counter P1. The flow then advances to step 13 to check if the content of the counter P1 is smaller than 2. If NO in step 13, the flow advances to step 14, and an object is judged as a periodic pattern. However, if YES in step 13, the flow advances to step 16, and an object is judged as a non-periodic pattern.

If it is determined in step 12 that the counter $S2 \neq 0$, this means that there is a defocus amount having the value E sufficiently larger than E1. In this case, a periodic pattern must be detected based on the number of defocus amounts satisfying Condition (1), i.e., the content of the counter S1. Therefore, the flow advances to step 15 to check if the content of the counter S1 is smaller than 2. If NO in step 15, the flow advances to step 14, and an object is judged as a periodic pattern. However, if YES in step 15, the flow advances to step 16, and an object is judged as a non-periodic pattern.

In the third periodic pattern detection method described above, it is checked in step 5 if a value E is larger than E3. In this case, a condition for checking whether or not a value G is smaller than G3 which is smaller than G1 may be added.

When a defocus amount having the value E exceeding the value E3 is detected, a periodic pattern is detected based on the number of defocus amounts satisfying Condition (1) in this case. A condition used in this case need only be more strict than Condition (2). Therefore, this condition may be set to be broader or more strict than Condition (1) depending on the value E3.

Furthermore, a condition for detecting a periodic pattern is switched between two conditions, i.e., Conditions (1) and (2) depending on whether or not a defocus amount having the value E exceeding the value E3 is detected. In this case, the number of conditions to be switched may be increased to achieve more accurate periodic pattern detection.

Embodiments wherein the above-mentioned periodic pattern detection methods are applied to a focus detection apparatus will be described below.

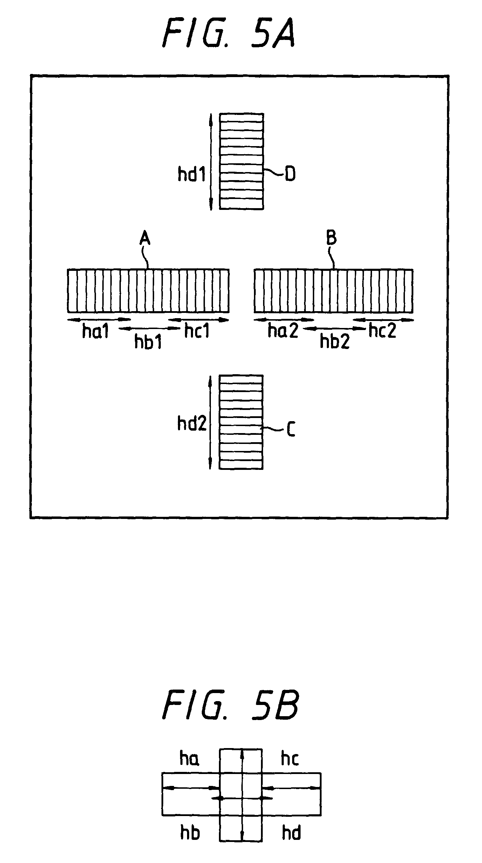

The first embodiment of the present invention is applied to a focus detection apparatus arranged as follows. That is, as shown in Fig. 5A, two pairs of image sensor arrays A and B, and C and D are respectively arranged in two directions, i.e., the horizontal and vertical directions. Each of the image sensor arrays A, B, C, and D is divided into a plurality of blocks to segment an object image, and focus detection calculations are made for each block.

As a result of the focus detection calculations, assume that one of blocks which performs focus detection in regions including common regions on a predicted focal plane of an object-lens like blocks hb and hd, as shown in Fig. 5B is a periodic pattern, and the other block is a non-periodic pattern. In this case, of a plurality of defocus amounts calculated by one block as the periodic pattern, a defocus amount falling within a predetermined range having a defocus amount calculated by the other block as the center is selected, and is determined as a defocus amount of one block as the periodic pattern.

As for blocks ha, hb, and hc aligned in the same direction, assume that an arbitrary block is a periodic pattern and a block adjacent to the arbitrary block is a non-periodic pattern. In this case, of a plurality of defocus amounts calculated by the block as the periodic pattern, a defocus amount falling within a predetermined range having a defocus amount calculated by the adjacent block as the center is selected, and is determined as a defocus amount of the block as the periodic pattern.

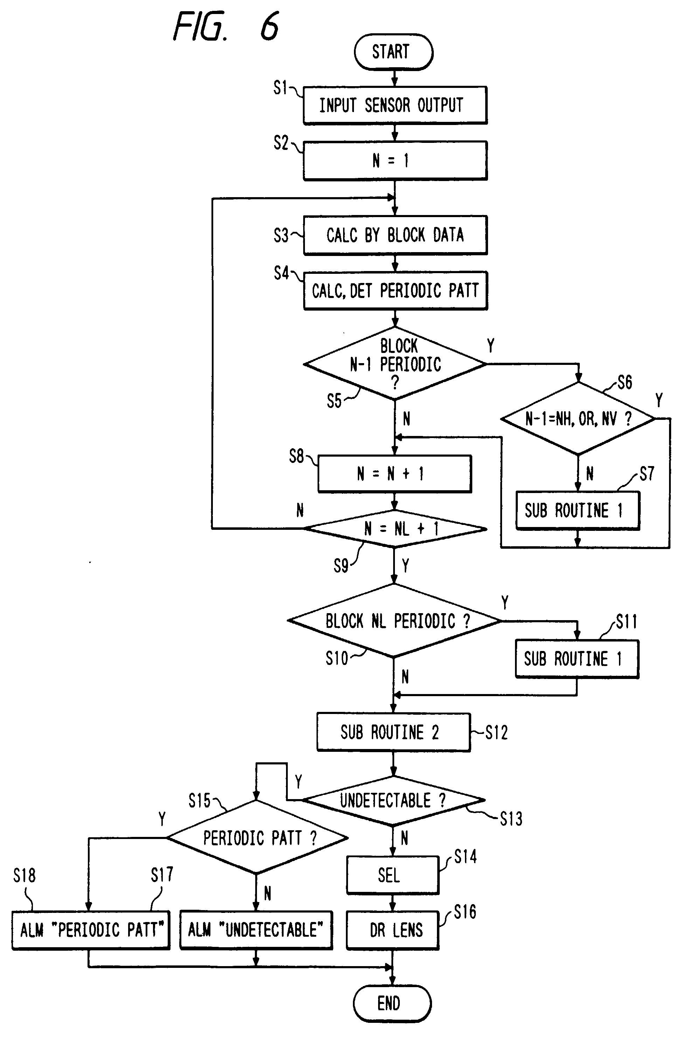

Focus detection processing according to the first embodiment of the present invention will be described below with reference to the flow chart of Fig. 6.

In this embodiment, each horizontal image sensor array has NY blocks 1 to NY, and each vertical image sensor array has (NL-NT+1) blocks NT to NL. In this case, a horizontal block NH and a vertical block NV have an orthogonal relationship including a common region on an object-lens like the blocks hb and hd shown in Fig. 5B.

In Fig. 6, photoelectric conversion signals from the image sensor arrays are input to the calculating portion in step 1. In step 2, "1" is set in a variable N indicating a block number for performing focus detection calculations. The flow then advances to step 3 to calculate correlation amounts C(L) by equations (1) within a predetermined range of $-L_{max}$ to $L_{max}$ using data in the Nth block. The range of the shift amount may be changed for each block.

In step 4, interpolation calculations and periodic pattern detection are performed by one of the above-mentioned three periodic pattern detection methods.

In step 5, it is checked if a block N-1 immediately preceding a block N for which focus detection calculations are being performed is a periodic pattern. If YES in step 5, the flow advances to step 6 to check if the immediately preceding block N-1 is a horizontal or vertical block NH or NV in the common region. If NO in step 6, the flow advances to step 8 via processing in SUB ROUTINE 1 in step 7 (to be described later). If YES in step 6, the flow advances to step 8 without executing SUB ROUTINE 1.

SUB ROUTINE 1 is not executed when the immediately preceding block N-1 is the horizontal or vertical block NH or NV in the common region due to the following reason. That is, when one of the blocks NH and NV is a periodic pattern, a defocus amount of a block as the periodic pattern is determined on the basis of a defocus amount of the other block, as described above. Contrary to this, SUB ROUTINE 1 is executed to determine a defocus amount of the block N-1 on the basis of defocus amounts of the two adjacent blocks when the immediately preceding block N-1 is a periodic pattern, as will be described later.

If it is determined in step 5 that the immediately preceding block N-1 is not a periodic pattern, the flow advances to step 8. If a block is an initial block having a block number N = 1, since there is no immediately preceding block N-1, the flow also advances to step 8.

In step 8, the present block number N is incremented by one. In step 9, it is checked if the block number N is a vertical limit value $N_Y+1$. If NO in step 9, the flow returns to step 3, and operations such as focus detection calculations are similarly executed for a block having the number N+1 incremented in step 8. If the block number N = NL+1, since there are no more blocks, the flow advances to step 10. In step 10, it is checked if the block having the number NL as the last block is a periodic pattern. If YES in step 10, the flow advances to step 12 via processing of SUB ROUTINE 1 in step 11; otherwise, the flow advances to SUB ROUTINE 2 in step 12 without executing SUB ROUTINE 1.

In step 12, processing of SUB ROUTINE 2 for checking if the horizontal or vertical block NH or NV as the common region is a periodic pattern and for determining a defocus amount of a block as the periodic pattern is executed. The operations of SUB ROUTINE 2 will be described later.

The flow then advances to step 13 to check if focus detection is disabled. The focus detection is disabled when there are no blocks from which defocus amounts satisfying Condition (1) are obtained and when all the blocks satisfying Condition (1), if any, are periodic patterns.

If YES in step 13, the flow advances to step 15 to check if there is a block as a periodic pattern. If YES in step 15, a periodic pattern alarm is generated in step 18; otherwise, a focus undetectable alarm is generated in step 17.

If it is determined in step 13 that focus detection is enabled, the flow advances to step 14. In step 14, of a plurality of defocus amounts obtained by performing focus detection calculations in a plurality of blocks, a defocus amount, which satisfies a predetermined condition like an object at a closest distance, is selected. In step 16, the object-lens is driven based on the selected defocus amount.

In this embodiment, one of a plurality of defocus amounts is selected in step 14. Alternatively, defocus amounts giving almost the same value may be grouped, defocus amounts of blocks belonging to the group may be weighted and averaged by the value E, and one of a plurality of defocus amounts calculated by weighting and averaging may be selected to drive the object-lens.

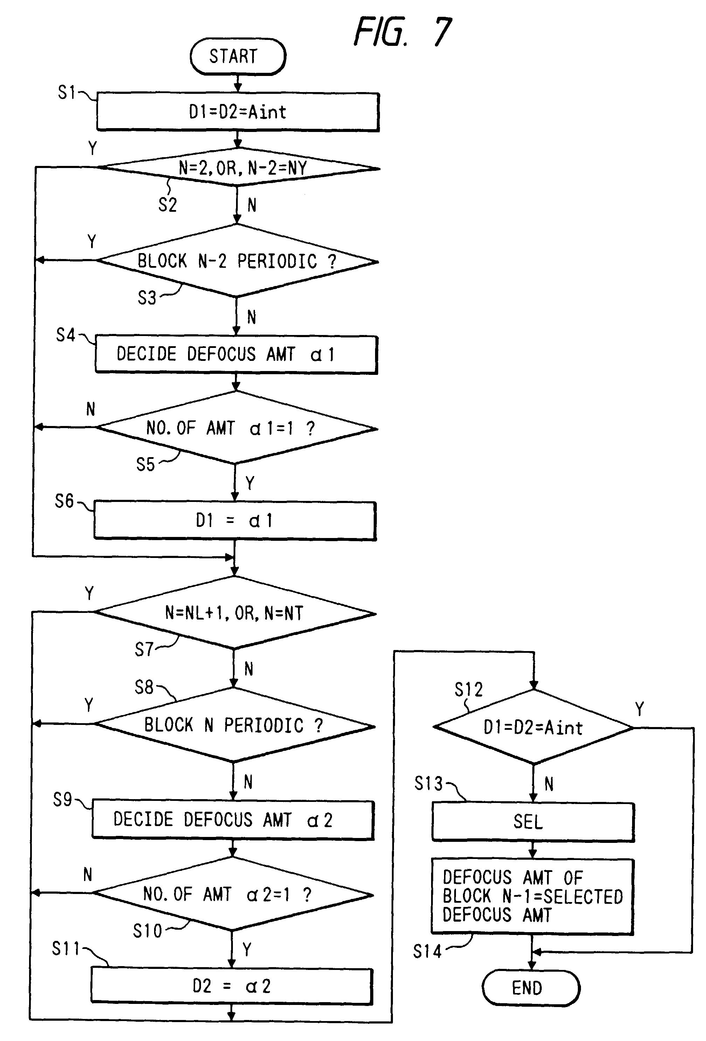

SUB ROUTINE 1 in steps 7 and 11 in Fig. 6 will be described in detail below with reference to the flow chart of Fig. 7.

In SUB ROUTINE 1, when a block N-1 immediately preceding the present block number N is a periodic pattern, if one of adjacent blocks N-2 or N is a non-periodic pattern, one of a plurality of defocus amounts of the block N-1 which is present within a predetermined range centered on a defocus amount of the block N-1 or N as the non-periodic pattern is selected as the defocus amount of the block N-1. If neither the adjacent blocks N-2 nor N are periodic blocks, one of defocus amounts, which is present in a predetermined range centered on a defocus amount of each of the adjacent blocks N-2 and N, is extracted. Then, one of the two extracted defocus amounts, which satisfies a predetermined condition, is selected.

In Fig. 7, memories D1 and D2 for storing defocus amounts are initialized in step 1. As an initial value of the memories D1 and D2, a sufficiently large numerical value falling outside the range of the shift amounts $-L_{max}$ to $L_{max}$, i.e., a value exceeding a defocus amount detection capability is preferable. In this case, D1 = D2 = Aint is set.

The flow advances to step 2 to check if the value N indicating a block number is N = 2 or a block N-2 before the immediately preceding block is N-2 = NY. If this condition is satisfied, the flow jumps to step 7; otherwise, the flow advances to step 3.

If the block number N = 2, a periodic pattern of a block N = 0 which does not exist must be checked in step 3. Therefore, the flow jumps to step 7 when N = 2.

If N-2 = NY, i.e., the last horizontal block, an adjacent block N-1 is a first vertical block. Therefore, the blocks N-2 and N-1 are not adjacent to each other. In this case, the flow also jumps to step 7.

In step 3, it is checked if the block N-2 is a periodic pattern. If YES in step 3, the flow jumps to step 7; otherwise, the flow advances to step 4.

In step 4, of a plurality of defocus amounts having a periodic pattern, a defocus amount ($\alpha$1) which is present in a predetermined range centered on a defocus amount of the block N-2 having no periodic pattern is extracted. A defocus amount to be extracted must have high reliability and satisfy Condition (1). Of course, the defocus amount of the block N-2 must satisfy Condition (1).

In step 5, it is checked if the number of defocus amounts ($\alpha$1) of the block N-1 is extracted based on the defocus amount of the block N-2 is 1. If YES in step 5, the extracted defocus amount is stored in the memory D1 in step 6, and the flow advances to step 7; otherwise, the flow advances to step 7 without storing the defocus amount.

In step 7, it is checked if the block number N indicates a vertical limit value NL+1 or a vertical initial value NT. If YES in step 7, the flow jumps to step 12; otherwise, the flow advances to step 8.

In this case, if the block number N = NL+1, a block NL+1 which does not exist must be checked in step 8. Therefore, when N = NL+1, the flow jumps to step 12.

When the block number N = NT, i.e., the vertical first block, an immediately preceding block is a last horizontal block, and the blocks N and N-1 are not adjacent to each other. In this case, the flow also jumps to step 12.

In step 8, it is checked if the block N is a periodic pattern. If YES in step 8, the flow jumps to step 12; otherwise, the flow advances to step 9. In step 9, of a plurality of defocus amounts of the block N-1 as the periodic pattern, a defocus amount ($\alpha$2) which is present in a predetermined range centered on a defocus amount of the block N having no periodic pattern is extracted. In this case, the defocus amount extracted in the block N-1 must have high reliability and satisfy Condition (1). Of course, the defocus amount of the block N must satisfy Condition (1).

It is checked in step 10 if the number of defocus amounts ($\alpha$2) extracted in step 10 is 1. If YES in step 10, the extracted defocus amount is stored in the memory D2 in step 11, and the flow advances to step 12; otherwise, the flow advances to step 12 without storing the defocus amount. It is checked in step 12 if the contents of the memories D1 and D2 satisfy D1 = D2 = Aint.

If D1 = D2 = Aint is not satisfied, this means that a defocus amount of the block N-1 which satisfies the condition in step 9 is present. Therefore, the defocus amounts stored in the memories D1 and D2 are compared in step 13 to select one which satisfies a certain condition. The selection condition in step 13 is as follows. For example, the certain condition is to select a shorter distance. Alternatively, a difference between the defocus amounts of the blocks N-2 and the memory DI is compared with a difference between the defocus amounts of the block N and the memory D2, and a smaller one is selected, or when the value E of the block N-2 is larger than that of the block N, the defocus amount of the memory D1 is selected; otherwise, the defocus amount of the memory D2 is selected.

The defocus amount selected in this manner is finally determined as that of the block N-1 in step 14.

In steps 5 and 10 in Fig. 7, it is checked if the number of defocus amounts of the block N-1 which fall within a predetermined range having a defocus amount of the block N-2 or N as the center is 1. When the predetermined range is set to be smaller than a minimum unit of a detectable defocus amount restricted by the pitch of the photoelectric transducers of the image sensor arrays A, B, C, and D (Fig. 5A) when no interpolation calculations are made, a plurality of defocus amounts do not exist in this range. Therefore, in judging steps 5 and 10 in Fig. 7, it need only be checked if a defocus amount is present in the predetermined range.

In Fig. 7, when a block adjacent to a block of a periodic pattern is a non-periodic pattern, if one defocus amount of the block as the periodic pattern is present in a predetermined range having the defocus amount of the adjacent block as the center, the one defocus amount is adopted as the defocus amount of the block as the periodic pattern. Alternatively, a defocus amount closest to the defocus amount of the adjacent block may be adopted. In this case, a condition that the absolute value of the closest defocus amount falls within a predetermined range may be added.

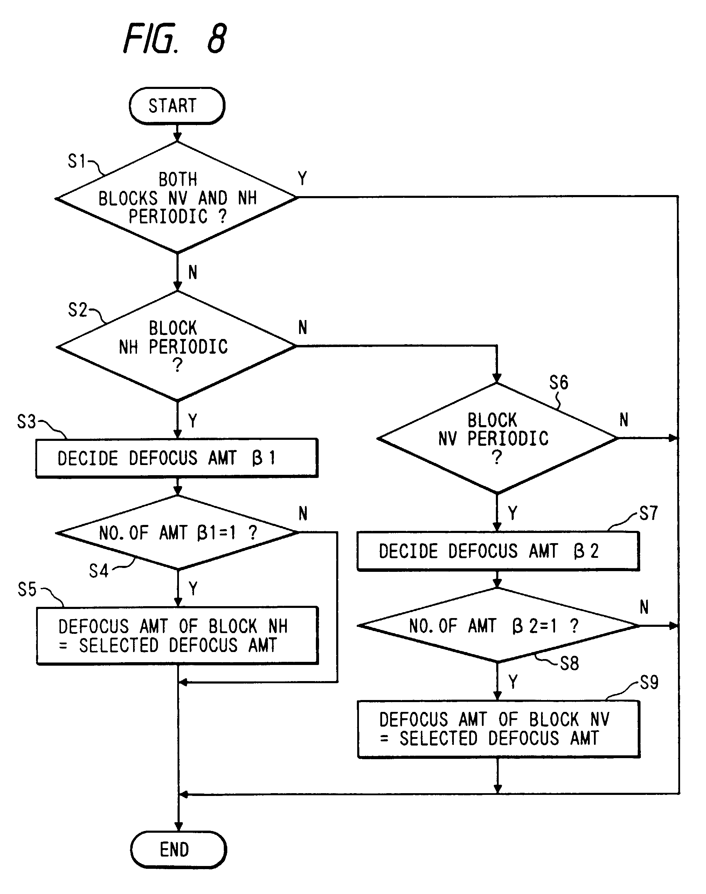

SUB ROUTINE 2 in step 12 of Fig. 6 will be described in detail below with reference to the flow chart of Fig. 8.

In SUB ROUTINE 2, whether or not the horizontal and vertical blocks NH and NV are periodic patterns is checked to determine a defocus amount of a block as a periodic pattern.

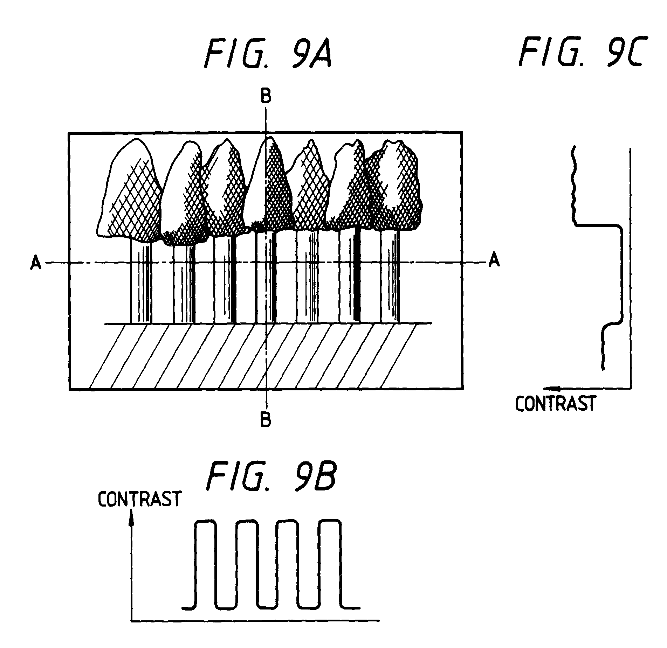

More specifically, as shown in Figs. 9A to 9C, in general, a periodic pattern is formed when objects (e.g., trees) which extend vertically are periodically aligned in the horizontal direction like a row of trees. Such objects tend not to simultaneously form periodic patterns in both the horizontal and vertical directions. A contrast along a horizontal line A - A in Fig. 9A periodically changes, as shown in Fig. 9B. However, a contrast along a vertical line B - B does not periodically change, as shown in Fig. 9C. Therefore, when focus detection is performed based on the horizontal contrast shown in Fig. 9B, correlation amounts C(L) include a plurality of local minimum values, and, hence, a plurality of defocus amounts are calculated. Of the plurality of defocus amounts, a true defocus amount should exhibit substantially the same value as that obtained by focus detection based on the vertical contrast shown in Fig. 9C. In SUB ROUTINE 2 shown in Fig. 8, a true defocus amount is obtained on the basis of the above-mentioned fact even from a periodic pattern.

In Fig. 8, it is checked in step 1 if both the horizontal and vertical blocks NH and NV are periodic patterns. If YES in step 1, the flow immediately exits SUB ROUTINE 2; otherwise, the flow advances to step 2 to check if the horizontal block NH is a periodic pattern.

If YES in step 2, since the vertical block NV is not a periodic pattern, the flow advances to step 3. In step 3, a defocus amount (β1) of the horizontal block NH which is present in a predetermined range having the defocus amount of the vertical block NV as the center is extracted. If it is determined in step 4 that the number of extracted defocus amounts is 1, the extracted defocus amount is determined as that of the horizontal block NH in step 5, and the flow exits SUB ROUTINE 2.

If it is determined in step 4 that two or more defocus amounts are extracted or no defocus amount is extracted, the flow exits SUB ROUTINE 2.

Both a defocus amount to be extracted and the defocus amount of the vertical block NV must have high reliability and satisfy Condition (1).

If it is determined in step 2 that the horizontal block NH is not a periodic pattern, the flow advances to step 6 to check if the vertical block NV is a periodic pattern. If NO in step 6, since neither the blocks NH nor NV are periodic patterns, the flow exits SUB ROUTINE 2.

However, if YES in step 6, since it has already been determined in step 2 that the horizontal block NH is not a periodic pattern, a defocus amount of the vertical block NV which falls within a predetermined range having the defocus amount of the horizontal block NH as the center is extracted in step 7. If it is determined in step 8 that the number of extracted defocus amounts is 1, the extracted defocus amount is determined as that of the vertical block NV in step 9, and the flow exits SUB ROUTINE 2. If it is determined in step 8 that two or more defocus amounts are extracted or no defocus amount is extracted, the flow exits SUB ROUTINE 2.

Both a defocus amount to be extracted and the defocus amount of the horizontal block NH must have high reliability and satisfy Condition (1).

In steps 4 and 8 in Fig. 8 described above, it is checked if the number of defocus amounts of one of the horizontal and vertical blocks, which fall within a predetermined range having a defocus amount of the other block as the center, is 1. When the predetermined range is set to be smaller than a minimum unit of a detectable defocus amount restricted by the pitch of the photoelectric transducers of the image sensor arrays A, B, C, and D (Fig. 5A) when no interpolation calculations are made, a plurality of defocus amounts do not exist in this range. Therefore, in judging steps 4 and 8, it need only be checked if a defocus amount is present in the predetermined range.

In Fig. 8, when one of the horizontal and vertical blocks NH and NV is a periodic pattern and the other block is not a periodic pattern, if one defocus amount of the block as the periodic pattern is present in a predetermined range having the defocus amount of the block as the non-periodic pattern as the center, one defocus amount is adopted as the defocus amount of the block having the periodic pattern. Alternatively, a defocus amount closest to the defocus amount of the block as the non-periodic pattern may be adopted. In this case, a condition that the absolute value of the closest defocus amount falls within a predetermined range may be added.

Furthermore, in Fig. 8, when both the horizontal and vertical blocks NH and NV are periodic patterns, the flow immediately exits SUB ROUTINE 2 and no defocus amount is determined. Alternatively, as in SUB ROUTINE 1 in Fig. 7, if an adjacent block in the same direction is not a periodic pattern, a defocus amount may be determined on the basis of the defocus amount of the adjacent block.

The second embodiment of the present invention will be described below.

The second embodiment is applied to a focus detection apparatus arranged as follows. That is, a pair of image sensor arrays are arranged in one direction corresponding to, e.g., the horizontal direction, and each of the pair of image sensor arrays is divided into a plurality of blocks to segment an object image, and focus detection calculations are performed for each block.

When an arbitrary block is a periodic pattern and a block adjacent to the arbitrary block is not a periodic pattern, a defocus amount which falls within a predetermined range centered on a defocus amount calculated in the adjacent block is selected from a plurality of defocus amounts calculated in the block as the periodic pattern. The selected defocus amount is determined as that of the block as the periodic pattern.

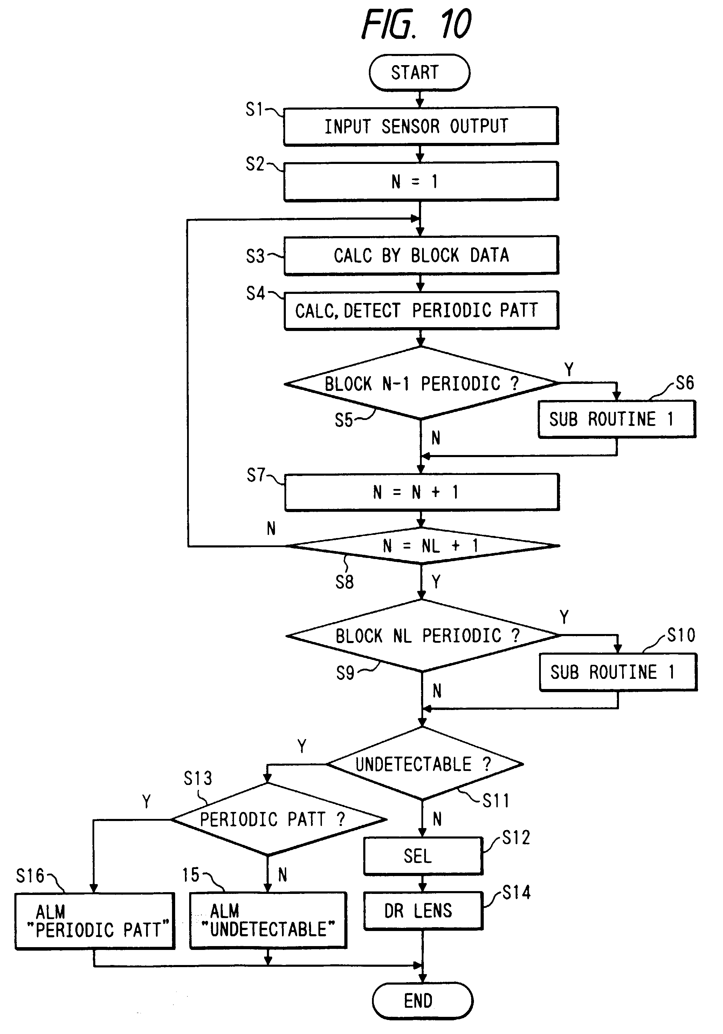

The second embodiment will be described in detail below with reference to Fig. 10. In the second embodiment, each image sensor array has NL blocks 1 to NL.

In step 1, photoelectric conversion signals from the image sensor arrays are input to the calculating portion. In step 2, a variable N indicating a block number for which focus detection calculations are performed is set to be N = 1. In step 3, correlation amounts C(L) are calculated by equations (1) within a predetermined range of $-L_{max}$ to $L_{max}$ using data in the Nth block. The range of the shift amount may be changed for each block.

In step 4, interpolation calculations and periodic pattern detection are performed by one of the above-mentioned three periodic pattern detection methods. In step 5, it is checked if a block N-1 immediately preceding a block N for which focus detection calculations are being performed is a periodic pattern. If YES in step 5, the flow advances to step 7 via the processing of SUB ROUTINE 1 (Fig. 7) in step 6; otherwise, the flow directly advances to step 7.

If the block number N = 1 in step 5, since there is no immediately preceding block, the flow advances to step 7.

In step 7, the block number N is incremented by one. It is then checked in step 8 if the block number N = NL+1. If NO in step 8, the flow returns to step 3, and operations such as focus detection calculations are executed for the block having the number updated in step 7; otherwise, since there are no more blocks, the flow advances to step 9. It is checked in step 9 if the last block NL is a periodic pattern. If YES in step 9, the flow advances to step 11 via the processing of SUB ROUTINE 1 in step 10; otherwise, the flow advances to step 11.

It is checked in step 11 if focus detection is disabled. The focus detection is disabled when there are no blocks from which defocus amounts satisfying Condition (1) are obtained and when all the blocks satisfying Condition (1), if any, are periodic patterns.

If YES in step 11, the flow advances to step 13 to check if there is a block as a periodic pattern. If YES in step 13, a periodic pattern alarm is generated in step 16; otherwise, a focus undetectable alarm is generated in step 15.

If it is determined in step 11 that focus detection is enabled, the flow advances to step 12. In step 12, of a plurality of defocus amounts obtained by performing focus detection calculations in a plurality of blocks, a defocus amount, which satisfies a predetermined condition like an object at a closest distance, is selected. In step 14, the object-lens is driven based on the selected defocus amount.

In the embodiment shown in Fig. 10, one of a plurality of defocus amounts is selected in step 12. Alternatively, defocus amounts giving almost the same value may be grouped, defocus amounts of blocks belonging to the group may be weighted and averaged by the value E, and one of a plurality of defocus amounts calculated by weighting and averaging may be selected to drive the object-lens.

The operation of SUB ROUTINE 1 in Fig. 10 is basically the same as that shown in Fig. 7, except that since there are no vertical image sensor arrays, it need not be checked in step 2 in Fig. 7 if N-2 = NY, and it need not be checked in step 7 if N = NT. Thus, a detailed description thereof will be omitted.

The third embodiment of a focus detection apparatus according to the present invention will be described below. The third embodiment is applied to a focus detection apparatus arranged as follows. That is, image sensor arrays are arranged in a plurality of directions, i.e., in the horizontal and vertical directions, and are not divided into a plurality of blocks, so that focus detection is performed to have the arrays in each direction as one block.

If a block in one direction is a periodic pattern and a block in the other direction is a non-periodic pattern, a defocus amount which falls within a predetermined range centered on one defocus amount calculated in the block in the other direction is selected from a plurality of defocus amount calculated in the block in one direction. The selected defocus amount is determined as that of the block in one direction as the periodic pattern.

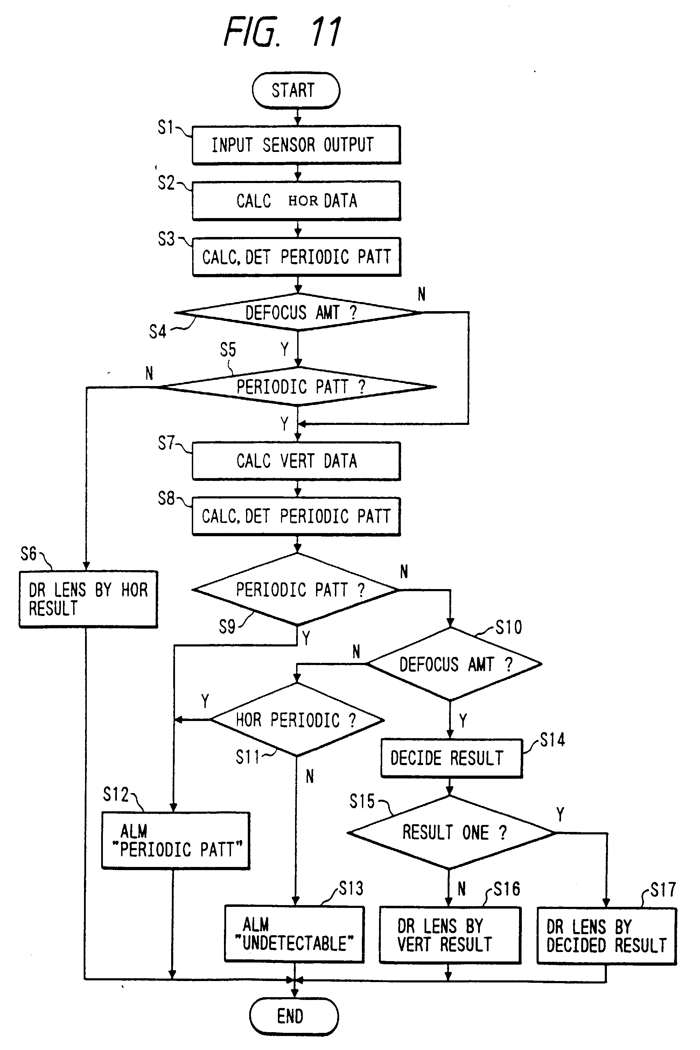

The third embodiment will be described in detail below with reference to Fig. 11.

In step 1, photoelectric conversion signals from the image sensor arrays are input to the calculating portion. In step 2, correlation amounts $C(L)$ are calculated by equations (1) within a predetermined range of $-L_{max}$ to $L_{max}$ using data of the horizontal image sensor arrays.

In step 3, interpolation calculations and periodic pattern detection are performed by one of the above-mentioned three periodic pattern detection methods. It is checked in step 4 if a reliable defocus amount, i.e., a defocus amount satisfying Condition (1) is calculated. In this checking operation, if the content of a counter S1 for counting the number of defocus amounts which satisfy Condition (1) is 0, it is determined that no defocus amount is calculated; if $S1 \geq 1$, it is determined that the defocus amount is calculated.

If there is a defocus amount satisfying Condition (1), it is checked in step 5 if a horizontal block is a periodic pattern. Whether or not an object is a periodic pattern has already been detected in step 3. Therefore, if YES in step 5, the flow advances to step 7, focus detection calculations are performed using data from the vertical image sensor arrays. However, if NO in step 5, the flow advances to step 6, and an object-lens is driven based on the defocus amount calculated in step 3.

If it is determined in step 4 that there is no defocus amount satisfying Condition (1), the flow advances to step 7. In step 7, correlation amounts $C(L)$ are calculated by equations (1) within a predetermined range of $-L_{max}$ to $L_{max}$ using data of the vertical image sensor arrays.

The flow then advances to step 9 to check if a vertical block is a periodic pattern. If NO in step 9, the flow advances to step 10; otherwise, a periodic pattern alarm is generated in step 12.

It is checked in step 10 if a reliable defocus amount, i.e., a defocus amount satisfying Condition (1) is calculated in step 8. In this checking operation, if the content of the counter S1 for counting the number of defocus amounts which satisfy Condition (1) is 0, it is determined that no defocus amount is calculated; if $S1 \geq 1$, it is determined that the defocus amount is calculated.

If it is determined in step 10 there is no defocus amount satisfying Condition (1), it is checked in step 11 if a horizontal block is a periodic pattern. If YES in step 11, a periodic pattern alarm is generated in step 12. If NO in step 11, since it has already been detected that a vertical block is not a periodic block and there is no reliable block, a focus undetectable alarm is generated in step 13.

If it is determined in step 10 that a reliable defocus amount is present, the flow advances to step 14, and a horizontal defocus amount which is calculated in step 3 and is present within the predetermined range having the reliable defocus amount calculated in step 8 as the center is extracted. A defocus amount to be extracted must have high reliability and satisfy Condition (1).

It is checked in step 15 if the number of extracted defocus amounts is 1. If YES in step 15, the flow advances to step 17 to drive the object-lens based on the extracted horizontal defocus amount. If a plurality of defocus amounts are extracted or no defocus amount is extracted, the flow advances to step 16, and the object-lens is driven based on the vertical defocus amount calculated in step 8.

In step 15 in Fig. 11 described above, it is checked if the number of defocus amounts of one of the horizontal and vertical blocks, which fall within a predetermined range having a defocus amount of the other block as the center, is 1. When the predetermined range is set to be smaller than a minimum unit of a detectable defocus amount restricted by the pitch of the photoelectric transducers of the image sensor arrays A and B when no interpolation calculations are made, a plurality of defocus amounts do not exist in this range. Therefore, in judging step 15, it need only be checked if a defocus amount is present in the predetermined range.

When a horizontal defocus amount is present in a predetermined range having the vertical defocus amount as the center, the selected horizontal defocus amount is preferentially used. However, the present invention is not limited to this. For example, the object-lens may be driven based on one of the vertical defocus amount and the selected horizontal defocus amount, which has a larger E value (i.e., higher reliability) or which indicates a closer distance.

The same shift range is adopted in correlation calculations using the horizontal data in step 3 and correlation calculations using the vertical data in step 8. However, the same shift range need not always be adopted.

In Fig. 11, when a vertical block is not a periodic pattern and a horizontal block is a periodic pattern, if one horizontal defocus amount is present in a predetermined range having a vertical defocus amount as the center, the horizontal defocus amount is adopted. Alternatively, a horizontal defocus amount closest to the vertical defocus amount may be adopted. In this case, a condition that the absolute value of the closest defocus amount falls within a predetermined range may be added. In addition, a vertical/horizontal position sensor comprising, e.g., a mercury switch is arranged in a camera, so that the order or priority of horizontal and vertical focus detection calculations may be changed based on the detection result of this sensor.

The fourth embodiment of a focus detection apparatus of the present invention will be described below. The fourth embodiment is applied to the most basic focus detection apparatus arranged as follows. That is, a pair of image sensor arrays are arranged in one direction corresponding to, e.g., a horizontal direction, and are not divided into blocks, so that focus detection is performed using one block. When a periodic pattern is detected, a periodic pattern alarm is signalled to a photographer.

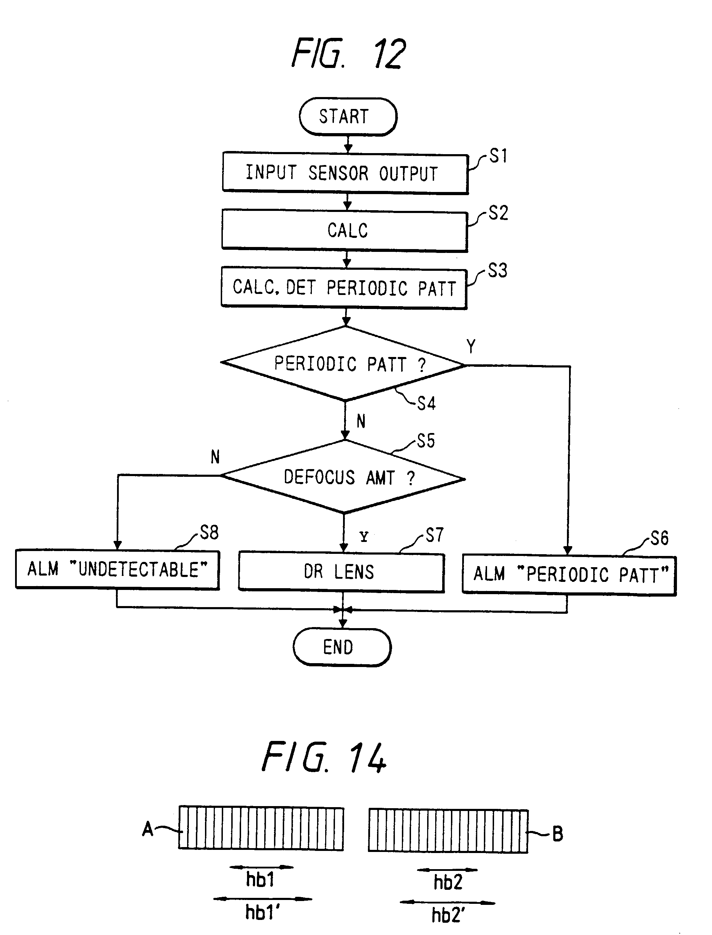

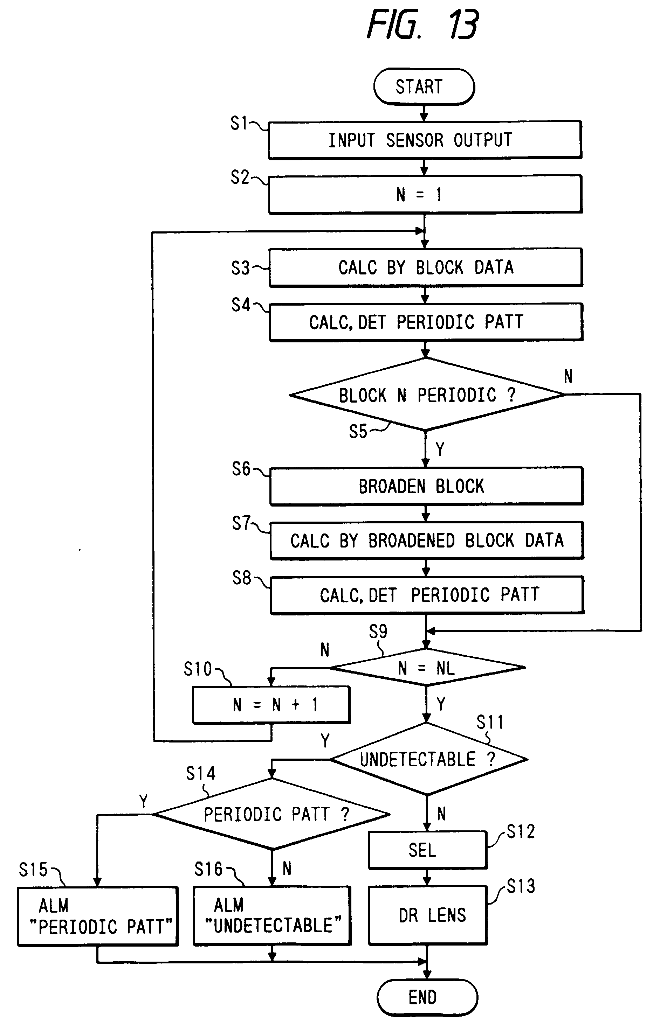

The fourth embodiment will be described in detail below with reference to the flow chart of Fig. 12.

In step 1, photoelectric conversion signals from the image sensor arrays are input to the calculating portion. In step 2, correlation amounts $C(L)$ are calculated by equations (1) within a predetermined range of $-L_{max}$ to $L_{max}$ using data in the Nth block. The range of the shift amount may be changed for each block. In step 3, interpolation calculations and periodic pattern detection are performed by one of the above-mentioned three periodic pattern detection methods. The flow advances to step 4 to check if a periodic pattern is detected in step 3. If YES in step 4, the flow advances to step 7 to generate a periodic pattern alarm; otherwise, the flow advances to step 5. It is checked in step 5 if a reliable defocus amount, i.e., a defocus amount satisfying Condition (1) is calculated. In this checking operation, if the content of a counter S1 for counting the number of defocus amounts which satisfy Condition (1) is 0, it is determined that no defocus amount is calculated; if $S1 \geq 1$, it is determined that the defocus amount is calculated. If there is no reliable defocus amount, the flow advances to step 8 to generate a focus undetectable alarm. If a reliable defocus amount is detected, the flow advances to step 7, and an object-lens is driven based on the defocus amount calculated in step 3.

The fifth embodiment of the present invention will be described below. The fifth embodiment is applied to a focus detection apparatus arranged as follows. That is, each of a pair of image sensor arrays is divided into a plurality of blocks to segment an object image, and focus detection calculations are performed for each block. When a certain block is a periodic pattern, the number of photoelectric transducers constituting the block is increased. More specifically, as shown in Fig. 14, focus detection ranges hb1 and hb2 of the image sensor arrays A and B are widened to ranges hb1′ and hb2′ to retry focus detection calculations.

The fifth embodiment will be described in detail below with reference to the flow chart of Fig. 13. Note that each array has NL blocks 1 to NL.

In step 1, photoelectric conversion signals from the image sensor arrays are input to the calculating portion. In step 2, a variable N indicating a block number for which focus detection calculations are performed is set to be $N = 1$. In step 3, correlation amounts $C(L)$ are calculated by equations (1) within a predetermined range of $-L_{max}$ to $L_{max}$ using data in the Nth block. The range of the shift amount may be changed for each block.

In step 4, interpolation calculations and periodic pattern detection are performed by one of the above-mentioned three periodic pattern detection methods. In step 5, it is checked if a periodic pattern is detected in step 4. If NO in step 5, the flow jumps to step 9. If YES in step 5, the range of a block N is widened in step 6, and correlation calculations are redone in step 7. In step 8, interpolation calculations and periodic pattern detection are executed as in step 4. It is checked in step 9 if the block number N is NL indicating the last block. If NO in step 9, the number N is incremented by 1 in step 10, and the flow returns to step 3. In step 3, operations such as focus detection calculations are performed for a block having the updated number. However, if YES in step 9, since there are no more blocks, the flow advances to step 11.

It is checked in step 11 if focus detection is disabled. The focus detection is disabled when there are no blocks from which defocus amounts satisfying Condition (1) are obtained and when all the blocks satisfying Condition (1), if any, are periodic patterns.

If YES in step 11, the flow advances to step 14 to check if there is a block as a periodic pattern. If YES in step 14, a periodic pattern alarm is generated in step 15; otherwise, a focus undetectable alarm is generated in step 16.

If it is determined in step 11 that focus detection is enabled, the flow advances to step 12. In step 12, of a plurality of defocus amounts obtained by performing focus detection calculations in a plurality of blocks, a defocus amount, which satisfies a predetermined condition like an object at a closest distance, is selected. In step 13, the object-lens is driven based on the selected defocus amount.

In step 12 of Fig. 13, one of a plurality of defocus amounts is selected. Alternatively, defocus amounts giving almost the same value may be grouped, defocus amounts of blocks belonging to the group may be weighted and averaged by the value E, and one of a plurality of defocus amounts calculated by weighting and averaging may be selected to drive the object-lens.

The embodiment shown in Fig. 13 may be applied to a focus detection apparatus in which a pair of image sensor arrays are arranged in a plurality of directions.

In the first to fifth embodiments described above, a focus undetectable alarm and a periodic pattern alarm must be easily identified from each other by a user. When an object is a periodic pattern, this does not mean that focus detection is impossible, but means that a defocus amount cannot be determined. Thus, if an alarm is merely generated, there is no difference from a focus undetectable alarm.

In post-processing of the alarm, a user roughly moves the object-lens to an in-focus state, and thereafter, the object-lens may be driven using a defocus amount closest to the in-focus state.

As described above, according to the present invention, whether or not an object is a periodic pattern can be determined. A periodic pattern alarm can be signalled to a user independently of a focus undetectable alarm caused by a low contrast.

In focus detection apparatuses in which a pair of image sensor arrays are arranged in each of a plurality of directions to perform focus detection or each of a pair of image sensor arrays is divided into a plurality of blocks to perform focus detection for each block, when an object is a periodic pattern, a true defocus amount can be selected with high possibility from a plurality of defocus amounts generated since the object is the periodic pattern. Therefore, even if a periodic pattern is formed, a lens can be driven to an in-focus state on the basis of appropriate focus detection result.

## Claims

1. A focus detection apparatus comprising:

   first photoelectric conversion means (A) having a first light receiving region (ha1; hb1; hc1) for outputting an electrical signal ($a_1$ to $a_n$) corresponding to a light intensity distribution on said first light receiving region;
   second photoelectric conversion means (B) having a second light receiving region (ha2; hb2; hc2) for outputting an electrical signal ($b_1$ to $b_n$) corresponding to a light intensity distribution on said second light receiving region;
   optical means (2) for splitting a light beam from a focus detecting area of an object to be photographed into two light beams to direct one of the two light beams on said first photoelectric conversion means (A) and the other of the two light beams on said second photoelectric conversion means (B);
   focus information producing means (4) for producing at least one focus datum ($C_0$) with respect to a focus condition of a photographic lens (1) and producing at least one reliability datum ($E$, $C_{ex}/E$) representing the reliability of said at least one focus datum ($C_0$), on the basis of the electrical signal ($a_1$ to $a_n$) corresponding to at least one part (ha1; hb1; hc1) of said first light receiving region and the electrical signal ($b_1$ to $b_n$) corresponding to at least one part (ha2; hb2; hc2) of said second light receiving region;

   characterised by
   periodicity judging means (6) for discriminating whether said at least one reliability datum satisfies a first reliability condition and/or a second reliability condition which is broader than said first condition, said periodicity judging means (6) being arranged to judge whether the object image has a periodic contrast pattern by detecting whether at least two said focus data ($C_0$), for which the corresponding reliability data ($E$,$C_{ex}/E$) satisfy at least one of said first and said second conditions, are produced by said focus information producing means (4).

2. Apparatus as claimed in claim 1, wherein the focus information producing means (4) is operable to generate a correlation function (C(L)) representing the correlation between the light intensity distributions on said first and second light receiving regions (ha1, hb1, hc1, ha2, hb2, hc2) as a function of a relative shift (L) between the two intensity distributions.

3. A focus detection apparatus as claimed in claim 2, wherein the focus information producing means (4) is arranged to derive said correlation function (C(L)) by obtaining a plurality of differences between different pairs of electrical signals ($a_1$ to $a_n$; $b_1$ to $b_n$), each pair corresponding to a part of said first light receiving region (ha2, hb2, hc2) and a part of said second light receiving region, respectively, and comparing the obtained differences to determine at least one local minimum difference value ($C_0$) to produce said at least one focus datum.

4. A focus detection apparatus as claimed in any preceding claim, wherein said at least one reliability datum comprises a contrast information value (E) and a noise information value ($C_{ex}/E$), wherein said first condition relates to a first predetermined contrast value ($E_1$) and a first predetermined noise value ($G_1$), and wherein said second condition relates to a second predetermined contrast value ($E_2$) which is smaller than said first predetermined contrast value and a second predetermined noise value ($G_2$) which is larger than or equal to said first predetermined noise value.

5. A focus detection apparatus as claimed in claim 4, wherein said periodicity judging means (6) is operable to judge that the reliability datum satisfies said first condition when the contrast information value (E) of the reliability datum is larger than said first predetermined contrast ($E_1$) and the noise information value ($C_{ex}/E$) of the reliability datum is smaller than said first predetermined noise value ($G_1$), and wherein said periodicity judging means is operable to judge that the reliability datum satisfies said second condition when the contrast information value of the reliability datum is larger than said second predetermined contrast value ($E_2$) and the noise information value of the reliability datum is smaller than said second predetermined noise value ($G_2$).

6. A focus detection apparatus as claimed in claim 5, wherein said periodicity judging means (6) is operable to determine whether the contrast information value (E) of the reliability datum satisfies a third condition relating to a contrast value ($E_3$) which is larger than said first ($E_1$) and said second ($E_2$) predetermined contrast values.

7. A focus detection apparatus as claimed in claim 6, wherein said periodicity judging means (6) is operable to judge that the object image does not have a periodic contrast pattern either when there is only one reliability datum (E, $C_{ex}/E$) satisfying said third condition, or when there is only one reliability datum satisfying at least one of said first and said second conditions and not satisfying said third condition.

8. A focus detecting apparatus as claimed in any preceding claim, wherein when said periodicity judging means (6) determines that the object image has a periodic contrast pattern, light receiving regions (ha1, ha2; hc1, hc2; hb1, hb2) near the first and second light receiving regions (hb1; hb2) from which the focus data ($C_0$) are obtained are set to be focus detection regions.

9. A focus detecting apparatus as claimed in any preceding claim, wherein the periodicity judging means (6) is operable to enlarge the extent of said first and second light receiving regions (hb1, hb2) for determining said at least one focus datum ($C_0$) when a periodic contrast pattern is detected.

10. A focus detecting apparatus as claimed in any one of claims 1 to 8, wherein said focus information detecting means (4) is operable to produce said at least one focus datum including at least one defocus amount (DF) corresponding to each of a plurality of focus detecting areas derived from corresponding regions (ha1, hb1, hc1, ha2, hb2, hc2) of said first and second photoelectric conversion (A, B) means and for producing at least one reliability datum (E, Cex/E) relating to the reliability of said focus information on the basis of the electrical signals ($a_1$ to $a_n$, $b_1$ to $b_n$) from said first and said second photoelectric conversion means (A, B);

wherein said periodicity judging means (6) is operable to judge that at least one of the plurality of focus detecting areas has a periodic pattern when said focus information producing means (4) produces a plurality of reliability data corresponding to said at least one of the plurality of focus detecting areas;
and further including detecting means for detecting whether or not a plurality of defocus amounts (DF), which said focus information producing means is operable to produce with respect to said at least one of the plurality of focus detecting areas, are within a range of a defocus amount corresponding to a different one of the plurality of focus detecting areas when said periodicity judging means judges that said at least one of the plurality of focus detecting areas has a periodic pattern and that said different one of the plurality of focus detecting areas does not have a periodic pattern; and
storing means responsive to said detecting means for storing one of the plurality of defocus amounts corresponding to said at least one of the plurality of focus detecting areas when said one of the plurality of defocus amounts is the only defocus amount, corresponding to said at least one of the plurality of focus areas, which falls within said range.

11. A focus detecting apparatus as claimed in any one of claims 3 to 7, further comprising:

third photoelectric conversion means (C) having a third light receiving region (hd1) for outputting an electrical signal corresponding to a light intensity distribution on said third light receiving region;
and fourth photoelectric conversion means (D) having a fourth light receiving region (hd2) for outputting an electrical signal corresponding to a light intensity distribution on said fourth light receiving region;
said first and second photoelectric conversion means (A, B) being arranged to extend perpendicularly to said third and fourth photoelectric conversion means;
said optical means (2) being arranged to split the light beam into two further images to cause the two further images to be respectively directed onto said third and fourth photoelectric conversion means;
wherein said focus information producing means (4) is arranged to obtain a plurality of differences (C(L)) between different pairs of electrical signals, each pair corresponding to a part of said third light receiving region and a part of said fourth light receiving region.

12. A focus detecting apparatus as claimed in claim 11, including means for comparing the obtained differences from the third and fourth light receiving regions to determine a second local minimum difference value, and for, when

EP 0 387 088 B1

one first local minimum value determined from said first and second light receiving regions is present in a predetermined range having the second local minimum value as the center, outputting the first local minimum value to produce said focus datum.

13. A focus detection apparatus as claimed in claim 11 or 12, wherein a first focus detecting area of the image, detectable by said first and second photoelectric conversion means (A, B) and a second focus detecting area of the image, detectable by said third and fourth photoelectric conversion means (C, D), cross each other.

14. A focus detection apparatus as claimed in claim 13, wherein said periodicity judging means (6) is operable to judge whether or not said second focus detecting area has a periodic pattern after the judgement of said first focus detecting area on the basis of at least one reliability datum ($C_{ex}/E$) and is operable to produce a periodicity judging signal when said periodicity judging means judges that said second focus detecting area has a periodic pattern.

15. A focus detection apparatus as claimed in claim 12, including storing means for storing a defocus amount (DF) corresponding to said focus datum when there is only one first local minimum value within said range.

16. A camera having a focus detection apparatus as claimed in any preceding claim and a drive controller (8) for controlling the driving of a photographic lens (1), said drive controller being operable to inhibit driving of the photographic lens when a periodic contrast pattern is detected by the focus detection apparatus.

17. A camera as claimed in claim 16 when dependent on claim 14, wherein said drive controller (8) is operable to inhibit driving of the photographic lens (1) when said periodicity judging means (6) judges that said second focus detecting area has a periodic pattern.

18. A camera as claimed in claim 16 or,17, each when dependent on claim 12, wherein said drive controller (8) is operable to drive the photographic lens (1) according to said focus datum.

19. A camera as claimed in claim 16 or 17, each when dependent on claim 10 or claim 15, wherein said drive controller (8) is operable to drive the photographic lens (1) according to said stored defocus amount.

20. A camera as claimed in any one of claims 16 to 19, including periodicity displaying means (7) for displaying that the object has a periodic contrast pattern.

21. A camera as claimed in any one of claims 16 to 20, including focus detection displaying means (7) responsive to said focus information producing means (4) for displaying that no focus information is derivable.

**Patentansprüche**

1. Fokusdetektiervorrichtung, umfassend:

- eine erste photoelektrische Wandlereinrichtung (A) mit einer ersten Lichtempfangszone (ha1 ; hb1 ; hc1) zum Ausgeben eines elektrischen Signals ($a_1$ bis $a_n$) entsprechend einer Lichtstärkeverteilung auf der ersten Lichtempfangszone;
- eine zweite photoelektrische Wandlereinrichtung (B) mit einer zweiten Lichtempfangszone (ha2; hb2; hc2) zum Ausgeben eines elektrischen Signals ($b_1$ bis $b_n$) entsprechend einer Lichtstärkeverteilung auf der zweiten Lichtempfangszone;
- eine Strahlteilereinrichtung (2) zum Aufspalten eines von einer Fokusdetektierfläche eines zu photographierenden Objekts kommenden Lichtstrahlenbündels in zwei Lichtstrahlenbündel, um eines der beiden Lichtstrahlenbündel auf die erste photoelektrische Wandlereinrichtung (A) und das andere der beiden Lichtstrahlenbündel auf die zweite photoelektrische Wandlereinrichtung (B) zu lenken;
- eine Fokusinformationerzeugungseinrichtung (4) zum Erzeugen mindestens eines Fokusdatenwerts ($C_0$) in Bezug auf einen Fokussierzustand eines Aufnahmeobjektivs (1) und zum Erzeugen mindestens eines Zuverlässigkeitsdatenwerts (E, $C_{ex}/E$), welcher die Zuverlässigkeit des mindestens einen Fokusdatenwerts ($C_0$) repräsentiert, basierend auf dem elektrischen Signal ($a_1$ bis $a_n$) entsprechend mindestens einem Teil (ha1; hb1; hc1) der ersten Lichtempfangszone und dem elektrischen Signal ($b_1$ bis $b_n$) entsprechend mindestens einem Teil (ha2; hb2; hc2) der zweiten Lichtempfangszone;

gekennzeichnet durch

eine Periodizitätserkennungseinrichtung (6), um festzustellen, ob der mindestens eine Zuverlässigkeitsdatenwert eine erste Zuverlässigkeitsbedingung und/oder eine zweite Zuverlässigkeitsbedingung, die breiter als die erste Bedingung ist, erfüllt, wobei die Periodizitätserkennungseinrichtung (6) derart ausgebildet ist, daß sie erkennt, ob das Objektbild ein periodisches Kontrastmuster besitzt, indem nachgewiesen wird, ob mindestens zwei der Fokusdatenwerte ($C_0$), für die die entsprechenden Zuverlässigkeitsdatenwerte (E, $C_{ex}/E$) mindestens eine von der ersten und der zweiten Bedingung erfüllen, von der Fokusinformationserzeugungseinrichtung (4) erzeugt werden.

**2.** Vorrichtung nach Anspruch 1, bei der

die Fokusinformationserzeugungseinrichtung (4) derart betreibbar ist, daß eine Korrelationsfunktion (C(L)) erzeugt wird, welche die Korrelation zwischen den Lichtstärkeverteilungen auf der ersten und der zweiten Lichtempfangszone (ha1, hb1, hc1, ha2, hb2, hc2) als eine Funktion einer Relativverschiebung (L) zwischen den zwei Stärkeverteilungen repräsentiert.

**3.** Vorrichtung nach Anspruch 2, bei der

die Fokusinformationserzeugungsvorrichtung (4) derart ausgebildet ist, daß sie die Korrelationsfunktion (C(L)) dadurch ableitet, daß sie mehrere Differenzen zwischen verschiedenen Paaren elektrischer Signale ($a_1$ bis $a_n$; $b_1$ bis $b_n$) ermittelt, wobei jedes Paar einem Teil der ersten Lichtempfangszone (ha2, hb2, hc2) bzw. einem Teil der zweiten Lichtempfangszone entspricht, und die ermittelten Differenzen vergleicht, um mindestens einen lokalen Minimumdifferenzwert ($C_0$) bestimmt, um mindestens einen Fokusdatenwert zu erzeugen.

**4.** Vorrichtung nach einem der vorhergehenden Ansprüche, bei der

der mindestens eine Zuverlässigkeitsdatenwert einen Kontrastinformationswert (E) und einen Rauschinformationswert ($C_{ex}/E$) aufweist, wobei die erste Bedingung sich auf einen ersten vorbestimmten Kontrastwert ($E_1$) und einen ersten vorbestimmten Rauschwert ($G_1$) bezieht, und wobei die zweite Bedingung sich auf einen zweiten vorbestimmten Kontrastwert ($E_2$), der kleiner als der erste vorbestimmte Kontrastwert ist, und auf einen zweiten vorbestimmten Rauschwert ($G_2$), der größer oder gleich dem ersten vorbestimmten Rauschwert ist, bezieht.

**5.** Vorrichtung nach Anspruch 4, bei der

die Periodizitätserkennungseinrichtung (6) derart betreibbar ist, daß erkannt wird, daß der Zuverlässigkeitsdatenwert die erste Bedingung erfüllt, wenn der Kontrastinformationswert (E) des Zuverlässigkeitsdatenwerts größer ist als der erste vorbestimmte Kontrast ($E_1$) und der Rauschinformationswert ($C_{ex}/E$) des Zuverlässigkeitsdatenwerts kleiner ist als der erste vorbestimmte Rauschwert ($G_1$), und wobei die Periodizitätserkennungseinrichtung derart betreibbar ist, daß sie erkennt, daß der Zuverlässigkeitsdatenwert die zweite Bedingung erfüllt, wenn der Kontrastinformationswert des Zuverlässigkeitsdatenwerts größer ist als der zweite vorbestimmte Kontrastwert ($E_2$), und der Rauschinformationswert des Zuverlässigkeitsdatenwerts kleiner ist als der zweite vorbestimmte Rauschwert ($G_2$).

**6.** Vorrichtung nach Anspruch 5, bei der

die Periodizitätserkennungseinrichtung (6) derart betreibbar ist, daß sie feststellt, ob der Kontrastinformationswert (E) des Zuverlässigkeitsdatenwerts eine dritte Bedingung erfüllt, die sich auf einen Kontrastwert ($E_3$) bezieht, der größer ist als der erste ($E_1$) und der zweite ($E_2$) vorbestimmte Kontrastwert.

**7.** Vorrichtung nach Anspruch 6, bei der

die Periodizitätserkennungseinrichtung (6) derart betreibbar ist, daß sie erkennt, daß das Objektbild kein periodisches Kontrastmuster aufweist, wenn entweder nur ein Zuverlässigkeitsdatenwert (E, $C_{ex}/E$) vorhanden ist, der die dritte Bedingung erfüllt, oder wenn es nur einen Zuverlässigkeitsdatenwert gibt, der mindestens eine von der ersten und der zweiten Bedingung erfüllt, die dritte Bedingung aber nicht erfüllt.

**8.** Vorrichtung nach einem der vorhergehenden Ansprüche, bei der,

wenn die Periodizitätserkennungseinrichtung (6) feststellt, daß das Objektbild ein periodisches Kontrastmuster aufweist, Lichtempfangszonen (ha1, ha2; hc1, hc2; hb1, hb2) in der Nähe der ersten und der zweiten Lichtempfangszonen (hb1; hb2), von denen die Fokusdatenwerte ($C_0$) erhalten werden, als Fokusdetektierzonen eingestellt werden.

**9.** Vorrichtung nach einem der vorhergehenden Ansprüche, bei der

die Periodizitätserkennungseinrichtung (6) derart betreibbar ist, daß sie das Ausmaß der ersten und der zweiten Lichtempfangszone (hb1, hb2) vergrößert, um den mindestens einen Fokusdatenwert ($C_0$) zu bestimmen, wenn

ein periodisches Kontrastmuster nachgewiesen wird.

10. Vorrichtung nach einem der Ansprüche 1 bis 8, bei der
die Fokusinformationnachweiseinrichtung (4) derart betreibbar ist, daß sie den mindestens einen Fokusdatenwert einschließlich mindestens eines Unschärfemaßes (DF) entsprechend jedem von einer Mehrzahl von Fokus-detektierflächen erzeugt, die von den entsprechenden Zonen (ha1, hb1, hc1, ha2, hb2, hc2) der ersten und der zweiten photoelektrischen Wandler einrichtung (A, B) abgeleitet werden, und um mindestens einen Zuverlässigkeitsdatenwert (E, $C_{ex}/E$) zu erzeugen, der sich auf die Zuverlässigkeit der Fokusinformation bezieht, basierend auf den elektrischen Signalen ($a_1$ bis $a_n$, $b_1$ bis $b_n$) von der ersten und der zweiten photoelektrischen Wandlereinrichtung (A, B); wobei

- die Periodizitätserkennungseinrichtung (6) derart betreibbar ist, daß sie erkennt, wenn mindestens eine der mehreren Fokusdetektierflächen ein periodisches Muster besitzt, wenn die Fokusinformationserzeugungseinrichtung (4) mehrere Zuverlässigkeitsdatenwerte erzeugt, die der mindestens einen von den mehreren Fokusdetektierflächen entsprechen; und
- außerdem eine Detektiereinrichtung vorgesehen ist, um festzustellen, ob eine Mehrzahl von Unschärfemaßen (DF), welche die Fokusinformationserzeugungseinrichtung bezüglich der mindestens einen von mehreren Fokus-detektierflächen zu erzeugen vermag, innerhalb eines Unschärfemaßbereichs liegt, der einer anderen der mehreren Fokusdetektierflächen entspricht, wenn die Periodizitätserkennungseinrichtung erkennt, daß die mindestens eine von den mehreren Fokusdetektierflächen ein periodisches Muster aufweist, unc die andere von den mehreren Fokusdetektierflächen kein periodisches Muster aufweist, und
- eine Speichereinrichtung vorgesehen ist, die auf die Detektiereinrichtung anspricht, um eines der mehreren Unschärfemaße entsprechend der mindestens einen von den mehreren Fokusdetektierflächen zu speichern, wenn das eine von den mehreren Unschärfemaßen das einzige Unschärfemaß ist, entsprechend der mindestens einen von den mehreren Fokusflächen, welches in den genannten Bereich fällt.

11. Vorrichtung nach einem der Ansprüche 3 bis 7,
gekennzeichnet durch:

- eine dritte photoelektrische Wandlereinrichtung (C) mit einer dritten Lichtempfangszone (hd1) zum Ausgeben eines elektrischen Signals entsprechend einer Lichtstärkeverteilung auf der dritten Lichtempfangszone, und
- eine vierte photoelektrische Wandlereinrichtung (D) mit einer vierten Lichtempfangszone (hd2) zum Ausgeben eines elektrischen Signals entsprechend einer Lichtstärkeverteilung auf der vierten Lichtempfangszone,

wobei

- die erste und zweite photoelektrische Wandlereinrichtung (A, B) derart angeordnet sind, daß sie sich senkrecht zu der dritten und der vierten photo-elektrischen Wandlereinrichtung erstrecken,
- die Strahlteilereinrichtung (2) derart angeordnet ist, daß sie den Lichtstrahl in zwei weitere Bilder aufspaltet, damit die beiden weiteren Bilder auf die dritte bzw. die vierte photoelektrische Wandlereinrichtung gelenkt werden,
- wobei die Fokusinformationserzeugungseinrichtung (4) derart ausgebildet ist, daß mehrere Differenzen (C(L)) zwischen unterschiedlichen Paaren elektrischer Signale erhalten werden, wobei jedes Paar einem Teil der dritten Lichtempfangszone und einem Teil der vierten Lichtempfangszone entspricht.

12. Vorrichtung nach Anspruch 11,
gekennzeichnet durch
eine Einrichtung zum Vergleichen der ermittelten Differenzen von der dritter und der vierten Lichtempfangszone, um einen zweiten lokalen Minimumdifferenzwert zu bestimmen, und um dann, wenn ein erster lokaler Minimumwert, der von der ersten und der zweiten Lichtempfangszone bestimmt wird, in einem vorbestimmten Bereich mit dem zweiten lokalen Minimumwert als Mittelpunkt liegt, den ersten lokalen Minimumwert auszugeben und den Fokusdatenwert zu erzeugen.

13. Vorrichtung nach Anspruch 11 oder 12, bei der
eine erste Fokusdetektierfläche des Bildes, die von der ersten und der zweiten photoelektrischen Wandlereinrichtung (A, B) nachweisbar ist, und eine zweite Fokusdetektierfläche des Bildes, die von der dritten und der vierten photoelektrischen Wandlereinrichtung (C, D) nachweisbar ist, einander kreuzen.

**14.** Vorrichtung nach Anspruch 13, bei der
die Periodizitätserkennungseinrichtung (6) derart betreibbar ist, daß sie erkennt, ob die zweite Fokusdetektierfläche ein periodisches Muster aufweist oder nicht, nachdem das Erkennen der ersten Fokusdetektierfläche auf der Grundlage mindestens eines Zuverlässigkeitsdatenwerts ($C_{ex}/E$) erfolgt ist, und derart betreibbar ist, daß ein Periodizitätserkennungssignal dann erzeugt wird, wenn die Periodizitätserkennungseinrichtung erkennt, daß die zweite Fokusdetektierfläche ein periodisches Muster aufweist.

**15.** Vorrichtung nach Anspruch 12,
gekennzeichnet durch
eine Speichereinrichtung zum Speichern eines Unschärfemaßes (DF) entsprechend dem Fokusdatenwert, wenn es nur einen ersten lokalen Minimumwert innerhalb des Bereiches gibt.

**16.** Kamera mit einer Fokusdetektiervorrichtung nach einem der vorhergehenden Ansprüche, und einer Treibersteuerung (8) zum Steuern des Antriebs eines Aufnahmeobjektivs (1), wobei die Treibersteuerung derart betreibbar ist, daß sie den Antrieb des Aufnahmeobjektivs dann sperrt, wenn von der Fokusdetektiervorrichtung ein periodisches Kontrasmuster erkannt wird.

**17.** Kamera nach Anspruch 16 in Abhängigkeit von Anspruch 14, bei der
die Treibersteuerung (8) derart betreibbar ist, daß sie den Antrieb des Aufnahmeobjektivs (1) dann sperrt, wenn die Periodizitätserkennungseinrichtung (6) erkennt, daß die zweite Fokusdetektierfläche ein periodisches Muster besitzt.

**18.** Kamera nach Anspruch 16 oder 17 jeweils abhängig von Anspruch 12, bei der
die Treibersteuerung (8) derart betreibbar ist, daß das Aufnahmeobjektiv (1) nach Maßgabe des Fokusdatenwerts angetrieben wird.

**19.** Kamera nach Anspruch 16 oder 17 jeweils abhängig von Anspruch 10 oder Anspruch 15, bei der
die Treibersteuerung (8) derart betreibbar ist, daß das Aufnahmeobjektiv (1) nach Maßgabe des gespeicherten Unschärfemaßes angetrieben wird.

**20.** Kamera nach einem der Ansprüche 16 bis 19,
mit einer Periodizitätsanzeigeeinrichtung (7), die anzeigt, daß das Objekt ein periodisches Kontrastmuster aufweist.

**21.** Kamera nach einem der Ansprüche 16 bis 20,
mit einer Fokusdetektieranzeigeeinrichtung (7), die auf die Fokusinformationserzeugungseinrichtung (4) anspricht, indem sie anzeigt, daß keine Fokusinformation ableitbar ist.

**Revendications**

**1.** Dispositif de détection de mise au point comprenant :

des premiers moyens de conversion photoélectrique (A) ayant une première région de réception de lumière (ha1 ; hb1 ; hc1) pour émettre un signal électrique ($a_1$ à $a_n$) correspondant à une distribution d'intensité lumineuse sur ladite première région de réception de lumière ;
des deuxièmes moyens de conversion photoélectrique (B) ayant une deuxième région de réception de lumière (ha$_2$ ; hb2 ; hc2) pour émettre un signal électrique ($b_1$ à $b_n$) correspondant à une distribution d'intensité lumineuse sur ladite deuxième région de réception de lumière ;
des moyens optiques (2) pour diviser un faisceau lumineux provenant d'une zone de détection de mise au point d'un objet à photographier en deux faisceaux lumineux afin de diriger l'un des deux faisceaux lumineux sur lesdits premiers moyens de conversion photoélectrique (A) et l'autre des deux faisceaux lumineux sur lesdits deuxièmes moyens de conversion photoélectrique (B) ;
des moyens de production d'informations de mise au point (4) pour produire au moins une donnée de mise au point ($C_0$) par rapport à une condition de mise au point d'un objectif photographique (1) et produire au moins une donnée de fiabilité (E, $C_{ex}/E$) représentant la fiabilité de ladite au moins une donnée de mise au point ($C_0$), sur la base du signal électrique ($a_1$ à $a_n$) correspondant à au moins une partie (ha1 ; hb1 ; hc1) de ladite première région de réception de lumière, et du signal électrique ($b_1$ à $b_n$) correspondant à au moins une

EP 0 387 088 B1

partie (ha2 ; hb2 ; hc2) de ladite deuxième région de réception de lumière ;

caractérisé par
des moyens de jugement de périodicité (6) pour distinguer si ladite au moins une donnée de fiabilité satisfait à une première condition de fiabilité et/ou à une deuxième condition de fiabilité qui est plus étendue que ladite première condition, lesdits moyens de jugement de périodicité (6) étant adaptés pour juger si l'image d'objet a un motif à contraste périodique en détectant si au moins deux desdites données de mise au point ($C_0$), pour lesquelles les données correspondantes de fiabilité (E, $C_{ex}/E$) satisfont à au moins une desdites première et deuxième conditions, sont produites par lesdits moyens de production d'informations de mise au point (4).

2. Dispositif selon la revendication 1, dans lequel les moyens de production d'informations de mise au point (4) peuvent fonctionner pour produire une fonction de corrélation (C(L)) représentant la corrélation entre lesdistributions d'intensité lumineuse sur lesdites première et deuxième régions de réception de lumière (ha1 , hb1 , hc1, ha2, hb2, hc2) en fonction d'un décalage relatif (L) entre les deux distributions d'intensité lumineuse.

3. Dispositif de détection de mise au point selon la revendication 2, dans lequel les moyens de production d'informations de mise au point (4) sont adaptés pour extraire ladite fonction de corrélation (C(L)) en obtenant une pluralité de différences entre des paires différentes de signaux électriques ($a_1$ à $a_n$ ; $b_1$ à $b_n$), chaque paire correspondant respectivement à une partie de ladite première région de réception de lumière (ha2, hb2, hc2) et à une partie de ladite deuxième région de réception de lumière, et en comparant les différences obtenues pour déterminer au moins une valeur locale minimale de différence ($C_0$) pour produire ladite au moins une donnée de mise au point.

4. Dispositif de détection de mise au point selon l'une quelconque des revendications précédentes, dans lequel ladite au moins une donnée de fiabilité comprend une valeur d'informations de contraste (E) et une valeur d'informations de bruit ($C_{ex}/E$), dans lequel ladite première condition concerne une première valeur prédéterminée de contraste ($E_1$) et une première valeur prédéterminée de bruit ($G_1$), et dans lequel ladite deuxième condition concerne une deuxième valeur prédéterminée de contraste ($E_2$) qui est inférieure à ladite première valeur prédéterminée de contraste et une deuxième valeur prédéterminée de bruit ($G_2$) qui est supérieure ou égale à ladite première valeur prédéterminée de bruit.

5. Dispositif de détection de mise au point selon la revendication 4, dans lequel lesdits moyens de jugement de périodicité (6) peuvent fonctionner pour juger que la donnée de fiabilité satisfait à ladite première condition quand la valeur d'informations de contraste (E) de la donnée de fiabilité est supérieure à ladite première valeur prédéterminée de contraste ($E_1$) et la valeur d'informations de bruit ($C_{ex}/E$) de la donnée de fiabilité est inférieure à ladite première valeur prédéterminée de bruit ($G_1$), et dans lequel lesdits moyens de jugement de périodicité peuvent fonctionner pour juger que la donnée de fiabilité satisfait à ladite deuxième condition quand la valeur d'informations de contraste de la donnée de fiabilité est supérieure à ladite deuxième valeur prédéterminée de contraste ($E_2$) et la valeur d'informations de bruit de la donnée de fiabilité est inférieure à ladite deuxième valeur prédéterminée de bruit ($G_2$).

6. Dispositif de détection de mise au point selon la revendication 5, dans lequel lesdits moyens de jugement de périodicité (6) peuvent fonctionner pour déterminer si la valeur d'informations de contraste (E) de la donnée de fiabilité satisfait à une troisième condition relative à une valeur de contraste ($E_3$) qui est supérieure auxdites première ($E_1$) et deuxième ($E_2$) valeurs prédéterminées de contraste.

7. Dispositif de détection de mise au point selon la revendication 6, dans lequel lesdits moyens de jugement de périodicité (6) peuvent fonctionner pour juger qu'une image d'objet n'a pas un motif à contraste périodique soit quand il existe seulement une donnée de fiabilité (E, $C_{ex}/E$) satisfaisant à ladite troisième condition, soit quand il existe seulement une donnée de fiabilité satisfaisant à au moins une desdites première et deuxième conditions et ne satisfaisant pas à ladite troisième condition.

8. Dispositif de détection de mise au point selon l'une quelconque des revendications précédentes, dans lequel quand lesdits moyens de jugement de périodicité (6) déterminent qu'une image d'objet a un motif à contraste périodique, des régions de réception de lumière (ha1, ha2 ; hc1, hc2 ; hb1, hb2) proches des première et deuxième régions de réception de lumière (hb1, hb2) à partir desquelles les données de mise au point ($C_0$) sont obtenues sont choisies pour être des régions de détection de mise au point.

9. Dispositif de détection de mise au point selon l'une quelconque des revendications précédentes, dans lequel les moyens de jugement de périodicité (6) peuvent fonctionner pour augmenter l'étendue desdites première et deuxième régions de réception de lumière (hb1, hb2) afin de déterminer ladite au moins une donnée de mise au point ($C_0$) quand un motif à contraste périodique est détecté.

10. Dispositif de détection de mise au point selon l'une quelconque des revendications 1 à 8, dans lequel lesdits moyens de détection d'informations de mise au point (4) peuvent fonctionner pour produire au moins une valeur d'écart de mise au point (DF) correspondant à chacune d'une pluralité de zones de détection de mise au point extraites de régions correspondantes (ha1, hb1, hc1, ha2, hb2, hc2) desdits premiers et deuxièmes moyens de conversion photoélectrique (A, B) et pour produire au moins une donnée de fiabilité (E, $C_{ex}/E$) relative à la fiabilité desdites informations de mise au point sur la base des signaux électriques ($a_1$ à $a_n$, $b_1$ à $b_n$) provenant desdits premiers et deuxièmes moyens de conversion photoélectrique (A, B) ;

dans lequel lesdits moyens de jugement de périodicité (6) peuvent fonctionner pour juger qu'au moins une de la pluralité de zones de détection de mise au point a un motif périodique quand lesdits moyens de production d'informations de mise au point (4) produisent une pluralité de données de fiabilité correspondant à ladite au moins une de la pluralité des zones de détection de mise au point ;
et comprenant en outre des moyens de détection pour détecter si une pluralité de valeurs d'écart de mise au point (DF), que lesdits moyens de production d'informations de mise au point peuvent fonctionner pour produire par rapport à ladite au moins une de la pluralité de zones de détection de mise au point, sont ou non dans une gamme d'une valeur d'écart de mise au point correspondant à l'une différente de la pluralité des zones de détection de mise au point quand lesdits moyens de jugement de périodicité jugent que ladite au moins une de la pluralité des zones de détection de mise au point a un motif périodique et que ladite une différente de la pluralité des zones de détection de mise au point n'a pas un motif périodique ; et
des moyens de stockage répondant auxdits moyens de détection pour stocker une de la pluralité de valeurs d'écart de mise au point correspondant à ladite au moins une de la pluralité de zones de détection de mise au point quand ladite une de la pluralité de valeurs d'écart de mise au point est la seule valeur d'écart de mise au point, correspondant à ladite au moins une de la pluralité des zones de mise au point, qui est située dans ladite gamme.

11. Dispositif de détection de mise au point selon l'une quelconque des revendications 3 à 7, comprenant en outre :

des troisièmes moyens de conversion photoélectrique (C) ayant une troisième région de réception de lumière (hd1) pour émettre un signal électrique correspondant à une distribution d'intensité lumineuse sur ladite troisième région de réception de lumière ;
et des quatrièmes moyens de conversion photoélectrique (D) ayant une quatrième région de réception de lumière (hd2) pour émettre en sortie un signal électrique correspondant à une distribution d'intensité lumineuse sur ladite quatrième région de réception de lumière ;
lesdits premiers et deuxièmes moyens de conversion photoélectrique (A, B) étant disposés pour s'étendre perpendiculairement auxdits troisièmes et quatrièmes moyens de conversion photoélectrique ;
lesdits moyens optiques (2) étant disposés pour diviser le faisceau lumineux en deux images supplémentaires pour amener les deux images supplémentaires à être dirigées respectivement sur lesdits troisièmes et quatrièmes moyens de conversion photoélectrique ;
dans lequel lesdits moyens de production d'informations de mise au point (4) sont disposés pour obtenir une pluralité de différences (C(L)) entre des paires différentes de signaux électriques, chaque paire correspondant à une partie de ladite troisième région de réception de lumière et à une partie de ladite quatrième région de réception de lumière.

12. Dispositif de détection de mise au point selon la revendication 11, comprenant des moyens pour comparer les différences obtenues à partir des troisième et quatrième régions de réception de lumière afin de déterminer une deuxième valeur locale minimale de différence, et pour, quand une première valeur locale minimale déterminée à partir desdites première et deuxième régions de réception de lumière est présente dans une gamme prédéterminée ayant la deuxième valeur locale minimale comme centre, émettre la première valeur locale minimale afin de produire ladite donnée de mise au point.

13. Dispositif de détection de mise au point selon la revendication 11 ou 12, dans lequel une première zone de détection de mise au point de l'image, pouvant être détectée par lesdits premiers et deuxièmes moyens de conversion photoélectrique (A, B) et une deuxième zone de détection de mise au point de l'image, pouvant être détectée par lesdits troisièmes et quatrièmes moyens de conversion photoélectrique (C, D), se chevauchent l'une l'autre.

**14.** Dispositif de détection de mise au point selon la revendication 13, dans lequel lesdits moyens de jugement de périodicité (6) peuvent fonctionner pour juger si ladite deuxième zone de détection de mise au point a ou non un motif périodique après le jugement de ladite première zone de détection de mise au point sur la base d'au moins une donnée de fiabilité ($C_{ex}/E$), et peuvent fonctionner pour produire un signal de jugement de périodicité quand lesdits moyens de jugement de périodicité jugent que ladite deuxième zone de détection de mise au point a un motif périodique.

**15.** Dispositif de détection de mise au point selon la revendication 12, comprenant des moyens de stockage pour stocker une valeur d'écart de mise au point (DF) correspondant à ladite donnée de mise au point quand il existe seulement une première valeur locale minimale dans ladite gamme.

**16.** Appareil de prise de vues ayant un dispositif de détection de mise au point selon l'une quelconque des revendications précédentes et un dispositif de commande d'entraînement (8) pour commander l'entraînement d'un objectif photographique (1), ledit dispositif de commande d'entraînement pouvant fonctionner pour empêcher un entraînement de l'objectif photographique quand un motif à contraste périodique est détecté par le dispositif de détection de mise au point.

**17.** Appareil de prise de vues selon la revendication 16 quand elle dépend de la revendication 14, dans lequel ledit dispositif de commande d'entraînement (8) peut fonctionner pour empêcher un entraînement de l'objectif photographique (1) quand lesdits moyens de jugement de périodicité (6) jugent que ladite deuxième zone de détection de mise au point a un motif périodique.

**18.** Appareil de prise de vues selon la revendication 16 ou 17, chacune dépendante de la revendication 12, dans lequel ledit dispositif de commande d'entraînement (8) peut fonctionner pour entraîner l'objectif photographique (1) en fonction de ladite donnée de mise au point.

**19.** Appareil de prise de vues selon la revendication 16 ou 17, chacune dépendante de la revendication 10 ou 15, dans lequel ledit dispositif de commande d'entraînement (8) peut fonctionner pour entraîner l'objectif photographique (1) en fonction de ladite valeur stockée d'écart de mise au point.

**20.** Appareil de prise de vues selon l'une quelconque des revendications 16 à 19, comprenant des moyens d'affichage de périodicité (7) pour afficher que l'objet a un motif à contraste périodique.

**21.** Appareil de prise de vues selon l'une quelconque des revendications 16 à 20, comprenant des moyens d'affichage de détection de mise au point (7) répondant auxdits moyens de production d'informations de mise au point (4) pour afficher qu'aucune information de mise au point ne peut être extraite.

# FIG. 1

## *FIG. 2*

START

S1 — L=-Lmax+1, S1=0

C(L):LOCAL MINIMUM ?  N

S2  Y

S3 — CALC

COND(1) OK ?  Y

S4  N

S5 — S1 = S1 + 1

L = Lmax - 1  N

S6  Y

L = L + 1 — S7

S1 < 2  Y

S8  N

S9 — JUDGE AS PERIODIC PATTERN

S10 — JUDGE AS NON-PERIODIC PATTERN

END

# FIG. 3

```
                    ┌─────────┐
                    │  START  │
                    └─────────┘
                         │
S1 ──┌────────────────────────────────────┐
     │  L=-Lmax+1, S1=0, P1=0              │
     └────────────────────────────────────┘
                         │
        ┌────────────────┤
        │         ◇──────────────────────◇
     N  │        ╱  C(L):LOCAL MINIMUM ?   ╲
   ◄────┤       ◇──────────────────────────◇
        │           S2          │ Y
        │                       │
        │         ┌─────────────────────┐
        │    S3 ──│        CALC         │
        │         └─────────────────────┘
        │                       │
        │          ◇─────────────────◇         Y
        │         ╱   COND(1) OK ?     ╲─────────────┐
        │        ◇─────────────────────◇            │
        │          S4        │ N                     │
        │                    │              ┌─────────────────┐ S5
        │          ◇─────────────────◇      │  P1 = P1 + 1    │
        │    N    ╱   COND(2) OK ?     ╲     │  S1 = S1 + 1    │
        │  ◄─────◇─────────────────────◇     └─────────────────┘
        │          S6        │ Y                     │
        │                    │                       │
        │         ┌─────────────────────┐            │
        │    S7 ──│    P1 = P1 + 1      │            │
        │         └─────────────────────┘            │
        │                    │◄──────────────────────┘
        │          ◇─────────────────◇
        │    N    ╱   L = Lmax - 1     ╲
   ┌────┼───────◇─────────────────────◇
   │    │                    │ Y    S8
   │  ┌─────────────┐
   │  │ L = L + 1   │─ S9
   │  └─────────────┘
   │                  ◇─────────────────◇          Y
   │                 ╱     P1 < 2         ╲──────────────┐
   └────────────────◇─────────────────────◇             │
                           │ N      S10                  │
                           │                             │
S11 ──┌──────────────────────────┐   ┌──────────────────────┐ S12
      │ JUDGE AS PERIODIC        │   │  JUDGE AS NON-       │
      │ PATTERN                  │   │  PERIODIC PATTERN    │
      └──────────────────────────┘   └──────────────────────┘
                    │                          │
                    └──────────┬───────────────┘
                          ┌─────────┐
                          │   END   │
                          └─────────┘
```

*FIG. 4*

START

S1 — L=-Lmax+1, S1=0, S2=0, P1=0

C(L):LOCAL MINIMUM ? — N ⟶

S2

Y

S3 — CALC

COND(1) OK ? — Y ⟶

S4

N

COND(2) OK ? — N ⟶

S8

Y

S9 — P1 = P1 + 1

E > E3 — N ⟶

S5

Y

S6 — S2 = S2 + 1

P1 = P1 + 1
S1 = S1 + 1 — S7

L = Lmax − 1 — N ⟶

S10

S11 — L = L + 1

Y

S2 = 0 — N ⟶

S12

S1 < 2 — Y ⟶

S15

Y

P1 < 2 — Y ⟶

S13

N

N

S14 — JUDGE AS PERIODIC PATTERN

JUDGE AS NON-PERIODIC PATTERN — S16

END

# FIG. 5A

# FIG. 5B

FIG. 6

```
                          ( START )
                             │
  S1 ─┐      ┌──────────────────────────────┐
      └──────│      INPUT SENSOR OUTPUT      │
             └──────────────────────────────┘
                             │
  S2 ─┐      ┌──────────────────────────────┐
      └──────│            N = 1             │
             └──────────────────────────────┘
                             │
                 ┌───────────┴──────────────┐
                 │                           │
  S3 ─┐      ┌──────────────────────────────┐
      └──────│       CALC BY BLOCK DATA      │
             └──────────────────────────────┘
                             │
  S4 ─┐      ┌──────────────────────────────┐
      └──────│     CALC, DET PERIODIC PATT   │
             └──────────────────────────────┘
                             │
                    ◇ BLOCK                Y
                      N-1 PERIODIC ──────────────┐
                      ?                          │
                   S5                            ◇ N-1=NH, OR, NV ?   Y
                      │ N                        S6          │        ─┐
                      │                             │ N                │
   S8 ─┐      ┌─────────────────┐                   │                  │
       └──────│     N = N + 1    │◄──────┐    ┌─────────────┐ S7        │
              └─────────────────┘        │    │ SUB ROUTINE 1│          │
                      │                  │    └─────────────┘          │
          N  ◇ N = NL + 1                │           │                 │
      ┌──────                            └───────────┴─────────────────┘
      │       S9    │ Y
      │             │
      │    ◇ BLOCK NL PERIODIC ?      Y      ┌─────────────┐ S11
      │       S10        │         ──────────│ SUB ROUTINE 1│
      │                  │ N                 └─────────────┘
      │                  │◄──────────────────────────┘
      │       ┌─────────────────┐
      │       │  SUB ROUTINE 2   │─ S12
      │       └─────────────────┘
      │                  │
      │        Y  ◇ UNDETECTABLE ?
      │     ┌─────┘         │ N
      │     │   S13    ┌─────────┐ S14
      │  ◇ PERIODIC PATT ?  │   SEL   │
      │  S15        │      └─────────┘
      │ Y           │ N         │
  S18 │        S17  │      ┌─────────┐ S16
 ┌──────────┐ ┌──────────────┐ │ DR LENS │
 │ALM        │ │ALM           │ └─────────┘
 │"PERIODIC  │ │"UNDETECTABLE"│
 │ PATT"     │ └──────────────┘
 └──────────┘
```

28

## FIG. 7

START

S1 — D1=D2=Aint

S2 — N=2,OR,N-2=NY  →Y

N

S3 — BLOCK N-2 PERIODIC ?  →Y

N

S4 — DECIDE DEFOCUS AMT α1

S5 — NO. OF AMT α1=1 ?  →N

Y

S6 — D1 = α1

S7 — N=NL+1,OR,N=NT  →Y

N

S8 — BLOCK N PERIODIC ?  →Y

N

S9 — DECIDE DEFOCUS AMT α2

S10 — NO. OF AMT α2=1 ?  →N

Y

S11 — D2 = α2

S12 — D1=D2=Aint  →Y

N

S13 — SEL

S14 — DEFOCUS AMT OF BLOCK N-1=SELECTED DEFOCUS AMT

END

## FIG. 8

```
            ( START )
                │
                ▼
      S1 ┌──────────────┐
         ╱     BOTH      ╲        Y
        ╱  BLOCKS NV AND NH ╲──────────────────────────────┐
        ╲    PERIODIC ?    ╱                               │
         ╲──────────────╱                                  │
                │ N                                        │
                ▼                                          │
      S2 ┌──────────────┐                                  │
         ╱    BLOCK      ╲        N                         │
        ╱  NH PERIODIC    ╲──────────────────┐             │
        ╲      ?         ╱                   │             │
         ╲──────────────╱                    ▼             │
                │ Y                  S6 ┌──────────────┐    │
                ▼                       ╱    BLOCK      ╲   N │
   S3 ┌────────────────────┐          ╱  NV PERIODIC    ╲───┤
      │ DECIDE DEFOCUS AMT β1│         ╲      ?         ╱    │
      └────────────────────┘           ╲──────────────╱     │
                │                              │ Y           │
                ▼                              ▼             │
         ┌──────────────┐          S7 ┌────────────────────┐│
         ╱ NO.OF AMT β1=1 ╲ N         │ DECIDE DEFOCUS AMT β2││
         ╲      ?         ╱──┐        └────────────────────┘│
          ╲──────────────╱   │               │              │
             S4    │ Y       │               ▼              │
   S5 ┌────────────────────┐ │        ┌──────────────┐  N   │
      │ DEFOCUS AMT OF BLOCK NH│      ╱ NO.OF AMT β2=1 ? ╲────┤
      │ = SELECTED DEFOCUS AMT│       ╲              ╱       │
      └────────────────────┘ │         ╲──────────╱  S8     │
                │            │            │ Y               │
                ◄────────────┘            ▼                 │
                │                S9 ┌────────────────────┐  │
                │                   │ DEFOCUS AMT OF BLOCK NV│
                │                   │ = SELECTED DEFOCUS AMT│
                │                   └────────────────────┘  │
                │                         │                 │
                ◄─────────────────────────┴─────────────────┘
                ▼
            ( END )
```

FIG. 9A

FIG. 9C

FIG. 9B

CONTRAST

## FIG. 10

START

S1 — INPUT SENSOR OUTPUT

S2 — N = 1

S3 — CALC BY BLOCK DATA

S4 — CALC, DETECT PERIODIC PATT

S5 — BLOCK N-1 PERIODIC ? — Y — SUB ROUTINE 1 — S6

N

S7 — N = N + 1

N — S8 — N = NL + 1 — Y

S9 — BLOCK NL PERIODIC ? — Y — SUB ROUTINE 1 — S10

N

Y — S11 — UNDETECTABLE ?

S13 — Y — PERIODIC PATT ? — N

S16 — ALM "PERIODIC PATT"

15 — ALM "UNDETECTABLE"

S12 — SEL

S14 — DR LENS

END

## FIG. 11

START

S1 — INPUT SENSOR OUTPUT

S2 — CALC HOR DATA

S3 — CALC, DET PERIODIC PATT

S4 — DEFOCUS AMT ? — N

Y

S5 — PERIODIC PATT ? — N

Y

S7 — CALC VERT DATA

S8 — CALC, DET PERIODIC PATT

S9 — PERIODIC PATT ? — N

Y

S6 — DR LENS BY HOR RESULT

S10 — DEFOCUS AMT ? — N

Y

S11 — HOR PERIODIC ? — Y

N

S14 — DECIDE RESULT

S15 — RESULT ONE ? — Y

N

S12 — ALM "PERIODIC PATT"

S13 — ALM "UNDETECTABLE"

S16 — DR LENS BY VERT RESULT

S17 — DR LENS BY DECIDED RESULT

END

## FIG. 12

```
        ┌─────────┐
        │  START  │
        └────┬────┘
             │
   ┌─────────▼──────────┐
   │ INPUT SENSOR OUTPUT │─── S1
   └─────────┬──────────┘
             │
   ┌─────────▼──────────┐
   │        CALC        │─── S2
   └─────────┬──────────┘
             │
   ┌─────────▼──────────┐
   │ CALC. DET PERIODIC PATT │─── S3
   └─────────┬──────────┘
             │
         ◇──────────◇           Y
      PERIODIC PATT ?  ──────────────┐
         ◇──────────◇                │
             │ S4                    │
             │ N                     │
         ◇──────────◇   N            │
        DEFOCUS AMT ? ──────┐        │
         ◇──────────◇       │        │
             │ Y            │        │
```

| ALM "UNDETECTABLE" S8 | DR LENS S7 | ALM "PERIODIC PATT" S6 |

```
             │
        ┌────▼────┐
        │   END   │
        └─────────┘
```

## FIG. 14

A —     hb1 / hb1'          hb2 / hb2'     — B

EP 0 387 088 B1

## FIG. 13

```
                    ( START )
                        │
   S1 ──┤      INPUT SENSOR OUTPUT        │
                        │
   S2 ──┤            N = 1                │
                        │
                        ▼
   S3 ──┤      CALC BY BLOCK DATA         │
                        │
   S4 ──┤    CALC, DET PERIODIC PATT      │
                        │
                        ▼
              ╱ BLOCK N PERIODIC ? ╲──── N ──┐
              ╲                    ╱          │
                  S5 ──┘  │                   │
                         Y                    │
   S6 ──┤        BROADEN BLOCK        │       │
                        │                     │
   S7 ──┤   CALC BY BROADENED BLOCK DATA │    │
                        │                     │
   S8 ──┤    CALC, DET PERIODIC PATT    │     │
                        │           S9        │
            N      ╱           ╲ ◄────────────┘
         ┌────────╱   N = NL    ╲
         │        ╲             ╱
   S10 ──┤N = N+1│     │
         └───┐         Y              S11
             │         ▼               │
             │     ╱ UNDETECTABLE ? ╲──┘
             │     ╲               ╱
             │ Y        │
      S14    │          N
       │     ▼          ▼
     ╱ PERIODIC PATT ? ╲      │  SEL  │── S12
     ╲                 ╱           │
   Y      │                        │
          N                        ▼
   S15    │      S16          │ DR LENS │── S13
    │            │                 │
 │  ALM  │   │  ALM   │            │
 │"PERIODIC   │"UNDETECTABLE"│     │
 │ PATT"  │   │        │           │
                                   ▼
                                ( END )
```

## FIG. 15

## FIG. 17A

## FIG. 17B

# FIG. 16A

# FIG. 16B

# FIG. 16C

# FIG. 16D

## FIG. 18A

## FIG. 18B

## FIG. 18C